(19) **Europäisches Patentamt / European Patent Office / Office européen des brevets**

(11) **EP 4 349 919 A1**

(12) **EUROPEAN PATENT APPLICATION**
published in accordance with Art. 153(4) EPC

(43) Date of publication:
**10.04.2024 Bulletin 2024/15**

(21) Application number: **22815704.6**

(22) Date of filing: **30.03.2022**

(51) International Patent Classification (IPC):
$C08L\ 101/00^{(2006.01)}$  $C08K\ 3/04^{(2006.01)}$
$C08K\ 7/06^{(2006.01)}$  $C08L\ 13/00^{(2006.01)}$
$C08L\ 15/00^{(2006.01)}$  $C08L\ 21/00^{(2006.01)}$
$C08L\ 23/00^{(2006.01)}$  $C08L\ 23/02^{(2006.01)}$
$C08L\ 23/12^{(2006.01)}$  $C08L\ 23/26^{(2006.01)}$
$C08L\ 25/04^{(2006.01)}$  $C08L\ 33/00^{(2006.01)}$
$C08L\ 67/00^{(2006.01)}$  $C08L\ 69/00^{(2006.01)}$

(52) Cooperative Patent Classification (CPC):
**C08K 3/04; C08K 7/06; C08L 13/00; C08L 15/00;
C08L 21/00; C08L 23/00; C08L 23/02; C08L 23/12;
C08L 23/26; C08L 25/04; C08L 33/00; C08L 67/00;
C08L 69/00; C08L 101/00;** Y02W 30/62

(86) International application number:
**PCT/JP2022/016271**

(87) International publication number:
**WO 2022/254947 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.06.2021 JP 2021093138
25.11.2021 JP 2021190760
25.11.2021 JP 2021190761
25.11.2021 JP 2021190762
07.12.2021 JP 2021198686**

(71) Applicants:
• **artience Co., Ltd.**
  **Tokyo (JP)**
• **TOYOCOLOR CO., LTD.**
  **Tokyo, 104-0031 (JP)**

(72) Inventors:
• **KUSAMA Daisuke**
  **Tokyo 104-0031 (JP)**
• **OHASHI Ryota**
  **Tokyo 104-0031 (JP)**

(74) Representative: **Becker, Eberhard
  Becker Kurig & Partner
  Patentanwälte mbB
  Bavariastraße 7
  80336 München (DE)**

(54) **THERMOPLASTIC RESIN COMPOSITION AND MOLDED BODY**

(57) Provided are a recycled-carbon-fiber-containing thermoplastic resin composition and molded body that have exceptional production properties and exceptional impact resistance even when recycled carbon fibers are used. This thermoplastic resin composition contains recycled carbon fibers (A) and a thermoplastic resin (B). In a thermoplastic resin composition according to one embodiment thereof, the oxygen content of the recycled carbon fibers (A) is 5.0 mass% or greater, and the thermoplastic resin (B) has an average solubility parameter of 10-15 and includes a polyamide resin (i-B).

**Description**

[Technical Field]

The present invention relates to a thermoplastic resin composition containing recycled carbon fibers and a molded body using the same.

[Background Art]

Carbon fiber-reinforced plastics (hereinafter sometimes referred to as CFRP) reinforced with carbon fibers (hereinafter sometimes referred to as CF) are used in a wide range of fields for industrial goods such as sports goods and aircraft parts. Rotating blades for wind power generation, which have been made of glass fiber composite materials, are being replaced with lightweight and high-strength CFRPs in order to improve efficiency and increase the size.

Conventionally, used CFRP waste materials and scrap (prepregs, sheet molding compounds, etc.) produced in a CFRP production process have been crushed and then disposed of in landfill, and a technique for reusing them as recycled carbon fibers (hereinafter sometimes referred to as r-CF) has been proposed.

Patent Literature 1 discloses, as a method of collecting r-CFs, a method of crushing CFPR into flakes, and then carbonizing in a substantially non-oxidizing atmosphere in a temperature range of 300 to 1,000°C and a method of carbonizing a CFPR in a substantially non-oxidizing atmosphere in a temperature range of 300 to 1,000°C and then crushing it into flakes. In addition, Patent Literature 2 discloses, as a method of obtaining r-CFs from a carbon fiber reinforce resin (CFRP) containing CFs and a matrix resin, an r-CF production method in which a matrix resin is thermally decomposed by heating a carbon fiber-reinforced resin to obtain a heat-treated product having a resin residue content of 0.01 to 30.0 mass%, and the heat-treated product is cut up.

However, the r-CFs have poor compatibility with plastics, and even when they are kneaded with a resin, extrusion is unstable, and recycled carbon fiber-reinforced plastics reinforced by r-CFs (hereinafter sometimes referred to as r-CFRP) have problems in productivity and mechanical strength.

In order to address such problems, Patent Literature 3 discloses a resin composition obtained using a resin and recycled carbon fibers having a fiber length variation coefficient of 20% or more and containing no sizing agent. However, the r-CFRPs obtained by this technique had insufficient physical properties. In addition, Patent Literature 4 discloses a polyolefin resin composition containing recycled carbon fibers, a polyolefin resin, and a dispersing agent having a basic group. The recycled carbon fibers have an average fiber length of 0.05 to 15.0 mm, and the amount of recycled carbon fibers added based on 100 mass% of the thermoplastic resin composition is 1 to 50 mass%. However, the market is demanding the development of r-CFRPs with better physical properties for resins other than polyolefins.

[Citation List]

[Patent Literature]

> [Patent Literature 1]
> Japanese Patent Laid-Open No. H7-118440
> [Patent Literature 2]
> Japanese Patent Laid-Open No. 2020-075493
> [Patent Literature 3]
> Japanese Patent Laid-Open No. 2019-163354
> [Patent Literature 4]
> Japanese Patent Laid-Open No. 2020-176244

[Summary of Invention]

[Technical Problem]

In automobile and aircraft parts in which safety is important, a large amount of intermediate product scrap is produced in a CFRP production process. In addition, in addition to the increasing demand for CFRPs, the lifespan of CFRPs for aircraft parts and the like is said to be about 20 years, and the amount of CFRP waste materials will decrease in the future. Therefore, the development of r-CFRPs with excellent properties using recycled carbon fibers (hereinafter sometimes referred to as r-CF) obtained by collecting carbon fibers from CFRP waste materials and the like is desirable.

The present invention has been made in view of the above circumstances and an objective of the present invention is to provide, even if recycled carbon fibers are used, a thermoplastic resin composition containing recycled carbon fibers having excellent productivity and excellent impact resistance and a molded body thereof.

[Solution to Problem]

The inventors conducted extensive studies and found that the objective of the present invention can be achieved in the following aspects, and completed the present invention.

[1]: A thermoplastic resin composition for carbon fiber reinforcement containing a recycled carbon fiber (A) and a thermoplastic resin (B),

wherein the oxygen content in the recycled carbon fiber (A) is 5.0 mass% or more,
wherein the thermoplastic resin composition satisfies any of the following (i) to (iv):

(i): the thermoplastic resin (B) has an average solubility parameter of 10 to 15 and contains a polyamide resin (i-B),
(ii): the thermoplastic resin (B) has an average solubility parameter of 9 to 15 and contains at least one of an acrylic resin (ii-B1) and a styrenic resin (ii-B2), and the glass transition temperature of the acrylic resin (ii-B1) and the styrenic resin (ii-B2) is 0°C or higher,
(iii): the recycled carbon fiber (A) has an acid value of 0.002 to 0.080 mmol/g and the thermoplastic resin (B) has an average flow start temperature of 250°C or lower and contains at least one of a polyester resin (iii-B 1) and a polycarbonate resin (iii-B2), and
(iv): the thermoplastic resin (B) contains a polyolefin resin having a melting point of 100°C or higher (excluding acid-modified thermoplastic resins) (iv-B) and at least one of an acid-modified polypropylene (iv-b-1) and a thermoplastic elastomer (iv-b-2), and the melting point of the acid-modified polypropylene (iv-b-1) is 130°C or higher,

where, the oxygen content is a value measured using an energy dispersive X-ray spectrometer attached to a scanning electron microscope (SEM) at an acceleration voltage of 15 kV and a field magnification of 3,000, wherein the average solubility parameter is a value calculated by the following

Formula (1):

$$\text{SP value} = \sqrt{(Ev/v)} = \sqrt{(\Sigma \Delta ei / \Sigma \Delta vi)}$$

(provided that, in the formula, Ev: evaporation energy (cal/mol), v: molar volume ($cm^3$/mol), $\Delta ei$: evaporation energy of each atom or atom group, and $\Delta vi$: molar volume of each atom or atom group), and
wherein the flow start temperature is a temperature at which the melt viscosity of the thermoplastic resin under a pressure of 9.8 MPa is 4,800 Pa·s or less in the evaluation of the melt viscosity using a flow tester.

[2]: The thermoplastic resin composition according to [1],
wherein an intensity ratio $I_1/I_2$ of a diffraction intensity $I_1$ at a Bragg angle $2\theta=25°$ to a diffraction intensity $I_2$ at $2\theta=44°$ observed by an X-ray diffraction method for the recycled carbon fiber (A) is less than 6.
[3]: The thermoplastic resin composition according to [1] or [2],

wherein the recycled carbon fiber (A) has a bulk density of 0.03 to 1.0 $g/cm^3$,
where, the bulk density is a value obtained according to JIS K 5101.

[4]: The thermoplastic resin composition according to any one of [1] to [3],
wherein the thermoplastic resin composition satisfies (iv), and the acid-modified polypropylene (iv-b-1) has a melt viscosity $\eta c$ of 10 to 500 Pa.s at 220°C and a shear rate of $1.2 \times 10^3$ $sec^{-1}$.
[5]: The thermoplastic resin composition according to any one of [1] to [4],
wherein the thermoplastic resin composition satisfies (iv), and the polyolefin resin having a melting point of 100°C or higher (excluding acid-modified thermoplastic resins) (iv-B) is a polypropylene homopolymer.
[6]: The thermoplastic resin composition according to any one of [1] to [5],
wherein the thermoplastic resin composition satisfies (iv), and the thermoplastic resin (B) contains an acid-modified polypropylene (iv-b-1) and a thermoplastic elastomer (iv-b-2).

[7]: The thermoplastic resin composition according to any one of [1] to [3],
wherein the thermoplastic resin composition satisfies any of (i) to (iii), and the thermoplastic resin (B) contains an acid-modified thermoplastic elastomer (b-1).

[8]: A molded body molded from the thermoplastic resin composition according to any one of [1] to [7].

[Advantageous Effects of Invention]

According to the present invention, even if recycled carbon fibers are used, excellent effects of being able to provide a thermoplastic resin composition containing recycled carbon fibers having excellent productivity and excellent impact resistance and a molded body thereof can be exhibited.

[Description of Embodiments]

Hereinafter, examples of a thermoplastic resin composition and a molded body according to the present disclosure will be described. Here, other embodiments are also included in the scope of the present invention as long as they are within the spirit of the present invention. In addition, in this specification, a numerical value range indicated using "to" includes the numerical values stated before and after "to." In addition, in this specification, a recycled carbon fiber is referred to as r-CF, a carbon fiber (that is, a non-recycled carbon fiber) is referred to as CF, a recycled carbon fiber-reinforced plastic is referred to as r-CFRP, and a carbon fiber-reinforced plastic (that is, a non-recycled carbon fiber-reinforced plastic) is referred to as CFRP. "Films" and "sheets" are not distinguished by thickness. In addition, unless otherwise noted, various components shown in this specification may be individually used alone or two or more thereof may be used in combination. In addition, the numerical values specified in this specification are values determined by methods disclosed in examples. In addition, "(meth)acrylic" refers to "acrylic and/or methacrylic," and "(meth)acrylate" refers to "acrylate and/or methacrylate."

Here, in this specification, the oxygen content is a value measured using an energy dispersive X-ray spectrometer attached to a scanning electron microscope (SEM) at an acceleration voltage of 15 kV and a field magnification of 3,000.

In addition, the average solubility parameter is a value calculated by the following Formula (1):

$$\text{SP value} = \sqrt{(Ev/v)} = \sqrt{(\Sigma \Delta ei / \Sigma \Delta vi)}$$

(provided that, in the formula, Ev: evaporation energy (cal/mol), v: molar volume ($cm^3$/mol), $\Delta ei$: evaporation energy of each atom or atom group, and $\Delta vi$: molar volume of each atom or atom group).

In addition, the flow start temperature is a temperature at which the melt viscosity of the thermoplastic resin under a pressure of 9.8 MPa is 4,800 Pa·s or less in the evaluation of the melt viscosity using a flow tester.

1. First embodiment

1-1. Thermoplastic resin composition

A thermoplastic resin composition for carbon fiber reinforcement according to a first embodiment (hereinafter, also referred to as the present composition in the first embodiment) contains a recycled carbon fiber (A) (hereinafter also referred to as r-CF (A)) and a thermoplastic resin (B). For the r-CF (A), an r-CF (A) having an oxygen content of 5.0 mass% or more is used, and the thermoplastic resin (B) has an average solubility parameter in a range of 10 to 15. The inventors conducted extensive studies, and as a result, found that, if an r-CF (A) having an oxygen content of 5.0 mass% or more is combined with a thermoplastic resin (B) having an average solubility parameter of 10 to 15, it is possible to significantly improve the compatibility between the resin and the recycled carbon fiber and to improve the adhesion between the resin and the recycled carbon fiber.

According to the present composition, the impact strength, the productivity and the elastic modulus are improved. In addition, according to excellent compatibility between the resin and the recycled carbon fiber, it is possible to reduce the occurrence of deposits on a die of a production facility. When the occurrence of deposits is reduced, it is possible to prevent problems such as mixing of deposits into the product, clogging of holes in the die with deposits, and causing material discharge failures, and thus it is possible to improve the productivity. In addition, when the adhesion between the thermoplastic resin (B) and the r-CF (A) is improved, it is possible to increase the elastic modulus. As a result, parts which have been made of metal materials can be expected to be replaced with r-CFRPs, which have excellent lightweightness. Hereinafter, respective components will be described.

1-1a. Recycled carbon fiber (A)

The recycled carbon fiber (r-CF) is a carbon fiber collected by recycling carbon fiber-reinforced plastic (CFRP) scrap, CFRP waste materials and the like. The CFRPs, which are raw materials for r-CFs, contain a carbon fiber (CF) and a matrix resin, and include not only products after molding but also intermediate products before molding (prepregs, tow pregs, sheet molding compounds, stampable sheets, bulk molding compounds, etc.). Here, the shape of the CFRPs and the form of the CFs included are not particularly limited. As the matrix resin in the CFRPs, a thermosetting resin, a thermoplastic resin or the like is used.

In the r-CF (A) according to the first embodiment, the oxygen content in the r-CF (A) is 5.0 mass% or more. The oxygen content in this specification is a value obtained by measurement described in examples to be described below. The contents of other elements are determined by the same method. As described above, the r-CF (A) is a carbon fiber obtained by thermally decomposing (gasifying, carbonizing, etc.) a matrix resin by performing a heat treatment and/or a heated vapor treatment on scrap, CFRP waste materials and the like. When the oxidizing atmosphere during the heating process is adjusted, it is possible to obtain an r-CF (A) having an oxygen content of 5.0 mass% or more.

When a thermoplastic resin (B) having an average solubility parameter of 10 to 15 to be described below is combined with an r-CF (A) having an oxygen content of 5.0 mass% or more, it is possible to significantly improve their mutual compatibility. In order to maintain a favorable strength of the thermoplastic resin composition, the upper limit value of the oxygen content of the r-CF (A) is preferably 20.0 mass% or less. A more preferable range is 5.0 to 15.0 mass%.

The carbon content of the r-CF (A) is 95.0 mass% or less. In order to maintain a favorable strength of the thermoplastic resin composition containing the r-CF (A), the lower limit value of the carbon content of the r-CF (A) is preferably 80 mass% or more. Here, the r-CF (A) may contain other elements such as nitrogen, silicon, sodium, and sulfur as long as they do not affect effects of the present invention.

In order to increase the impact resistance and the elastic modulus, the fiber length of the r-CF (A) is preferably 0.05 mm or more. The upper limit value is not particularly limited, and is preferably 20 mm or less in consideration of availability.

Examples of commercial r-CF (A) products include CARBISO MF series (an average fiber length of 0.08 to 0.1 mm and an oxygen content of 6%) and CARBISO C series (an average fiber length of 3 to 10 mm and an oxygen content of 5%).

In order to further improve the adhesion between the r-CF (A) and the thermoplastic resin (B), an intensity ratio $I_1/I_2$ of a diffraction intensity $I_1$ at a Bragg angle $2\theta=25°$ to a diffraction intensity $I_2$ at $2\theta=44°$ observed by an X-ray diffraction method for the r-CF (A) is preferably less than 6. In the r-CF (A), $2\theta=25°$ represents diffraction of the (002) plane, and 44° represents diffraction of the (10) plane.

In the heat treatment process in a reuse production process from the CFRPs, oxygen-derived functional groups are generated in a part of the surface of the r-CF (A) by creating an oxidizing atmosphere. When the oxygen-derived functional group is introduced, the diffraction intensity of the (002) plane of the r-CF (A) decreases. When the diffraction intensity of the (002) plane of the r-CF (A) decreases, it is possible to improve the adhesion to the thermoplastic resin (B) having an average solubility parameter of 10 to 15. On the other hand, in consideration of the mechanical strength of the obtained thermoplastic resin composition, it is desirable that the diffraction intensity of the (10) plane of the r-CF (A) be as high as possible. In the obtained thermoplastic resin composition, in order to achieve excellent mechanical strength, the lower limit value of the intensity ratio $I_1/I_2$ is preferably 3 or more. A more preferable range of the intensity ratio $I_1/I_2$ is 3 to 5.9, and a still more preferable range is 4 to 5.9. In addition, the analytical intensity of $I_2$ is preferably 500 to 1,000 and more preferably 600 to 900. When a treatment time under an oxidizing atmosphere is adjusted, it is possible to obtain an r-CF (A) having an intensity ratio $I_1/I_2$ of the diffraction intensity $I_1$ at a Bragg angle $2\theta=25°$ to the diffraction intensity $I_2$ at $2\theta=44°$ observed by an X-ray diffraction method being less than 6.

In order to further improve the productivity of the present composition, the bulk density of the r-CF (A) is preferably 0.03 to 1.0 g/cm³. If an r-CF (A) having a bulk density in this range is used, it is possible to effectively prevent fibers from accumulating at a supply port when the r-CF (A) is supplied to a production facility in the production of the present composition, and it is possible to improve the productivity. A more preferable range of the bulk density of the r-CF (A) is 0.05 to 1.0 g/cm³, and a still more preferable range is 0.1 to 1.0 g/cm³. When a rotation speed of a rotary blade of a crusher, the opening of a classification mesh and the like are adjusted, it is possible to obtain an r-CF (A) having a bulk density of 0.05 to 1.0 g/cm³.

The amount of the r-CF (A) added based on 100 mass% of the present composition is preferably 10 to 40 mass%, more preferably 15 to 35 mass%, and still more preferably 20 to 30 mass% in order to achieve mechanical properties, processability and productivity together.

1-lb. Thermoplastic resin (B)

The thermoplastic resin is a resin that softens and becomes plastic when heated to an appropriate temperature, and solidifies when cooled, and the thermoplastic resin (B) according to the first embodiment is specifically a resin having an average solubility parameter of 10 to 15. The thermoplastic resins (B) can be used alone or two or more thereof can be used in combination. When two or more thereof are used, the solubility parameter of each thermoplastic resin does not need to be in a range of 10 to 15, and the average solubility parameter when the thermoplastic resins to be used are blended may be in a range of 10 to 15.

In this specification, the average solubility parameter is a value calculated by the Fedor's method, and is a value obtained by methods described in examples to be described below. When a thermoplastic resin (B) having an average solubility parameter of 10 to 15 is combined with an r-CF (A) having an oxygen content of 5.0 mass% or more, as described above, it is possible to significantly increase the compatibility between the r-CF (A) and the thermoplastic resin (B) and improve the adhesion. As a result, it is possible to improve the impact resistance. A more preferable range of the solubility parameter of the thermoplastic resin (B) is 11 to 14.

The thermoplastic resin (B) is not particularly limited as long as it has an average solubility parameter of 10 to 15, and it can be variously selected. Examples of thermoplastic resins having a solubility parameter of 10 to 15 include polyamide resins, methyl acrylate, polyacrylonitrile, and polyester resins.

Preferable examples of the present composition include a thermoplastic resin composition containing a recycled carbon fiber (A) having an oxygen content of 5.0 mass% or more and a thermoplastic resin (B) having an average solubility parameter of 10 to 15 and containing a polyamide resin (i-B).

As specific examples of polyamide resins, a polyamide resin having at least one selected from the group consisting of $-[NH(CH_2)_5CO]-$, $-[NH(CH_2)_6NHCO(CH_2)_4CO]-$, $-[NH(CH_2)_6NHCO(CH_2)_8CO]-$, $-[NH(CH_2)_{10}CO]-$, $-[NH(CH_2)_{11}CO]-$, and $-[NH(CH_2)_2NHCO-D-CO]-$(in the formula, D represents an unsaturated hydrocarbon having 3 to 4 carbon atoms) as a structural unit is preferably used. Specific examples include 6-nylon, 66-nylon, 610-nylon, 11-nylon, 12-nylon, 6/66 copolymerized nylon, 6/610 copolymerized nylon, 6/11 copolymerized nylon, 6/12 copolymerized nylon, 6/66/11 copolymerized nylon, 6/66/12 copolymerized nylon, 6/66/11/12 copolymerized nylon, 6/66/610/11/12 copolymerized nylon and dimer acid polyamide resins. These polymers or copolymers may be used alone or mixtures of two or more thereof may be used.

Specific examples of 6-nylon resins include Amilan CM1041-LO (commercially available from Toray Industries, Inc., MFR: 21 g/10 min), Amilan CM1007 (commercially available from Toray Industries, Inc., MFR: 21 g/10 min), and Unitika nylon A1020LP (commercially available from Unitika Ltd., MFR: 109 g/10 min).

Specific examples of 66-nylon resins include Amilan CM3001N (commercially available from Toray Industries, Inc., MFR: 103 g/10 min).

Specific examples of polyester resins include polyethylene terephthalate (PET), polybutylene terephthalate (PBT), polycyclohexene dimethylene terephthalate (PCT), polytrimethylene terephthalate (PTT), polyethylene naphthalate (PEN), and liquid crystal polyester.

Particularly preferable examples of thermoplastic resins (B) include Unitika nylon A1020LP (6-nylon, commercially available from Unitika Ltd., MFR: 109 g/10 min), and Amilan CM3001N (66-nylon, commercially available from Toray Industries, Inc., MFR: 103 g/10 min).

In addition, it is sufficient that the average solubility parameter of the thermoplastic resin (B) after blending satisfy 10 to 15, and a thermoplastic resin having a solubility parameter of less than 10 can be preferably blended. Examples of thermoplastic resins having a solubility parameter of less than 10 include Prime PP J704UG (PP, a solubility parameter of 9.3) and Admer QF500 (maleic anhydride-modified PP, a solubility parameter of 9.6).

In order to more effectively increase the impact resistance, it is more preferable that the solubility parameter of each resin used for the thermoplastic resin (B) satisfy 10 to 15.

The average MFR of the thermoplastic resin (B) is preferably 10 g/min or more and more preferably 20 g/min or more. If the average MFR of the thermoplastic resin (B) is set to 10 g/min or more, the melt viscosity when the r-CF (A) and the thermoplastic resin (B) are kneaded decreases, breakage of the r-CF (A) can be minimized, and thus high mechanical properties can be exhibited. The upper limit value of the average MFR of the thermoplastic resin (B) is not particularly limited, and is generally 200 g/min or less in consideration of availability.

1-lb-1. Acid-modified thermoplastic elastomer (b-1)

The thermoplastic resin (B) may contain an acid-modified thermoplastic elastomer (b-1). Here, in this specification, "thermoplastic elastomer" is a polymer that softens and becomes plastic when heated to an appropriate temperature and exhibits elasticity when cooled, and does not exhibit a melting point according to a DSC method. When the r-CF (A) and the thermoplastic resin (B) are combined and additionally, the acid-modified thermoplastic elastomer (b-1) is contained as the thermoplastic resin (B), it is possible to produce a thermoplastic resin composition with significantly improved compatibility and high impact resistance.

"Acid-modified thermoplastic elastomer" is a thermoplastic elastomer to which an acidic functional group is introduced by graft polymerization or the like. Preferable examples of acid-modified thermoplastic elastomers include acid-modified styrenic elastomers and acid-modified olefin elastomers. Acid modification refers to introduction of a cyclic acid anhydride group or a carboxylic acid group to a copolymer side chain using, for example, a cyclic acid anhydride such as succinic anhydride, maleic anhydride, glutaric anhydride, or phthalic anhydride.

Examples of styrenic elastomers include block copolymers composed of a polystyrene block and an elastomer block having a polyolefin structure. Specific examples include styrene-isoprene-styrene block copolymers (SIS), hydrogenated products of styrene-ethylene-butylene-styrene block copolymers (SEPS), styrene-butylene-styrene block copolymers (SBS), hydrogenated products of styrene-ethylene-butylene-styrene block copolymers (SEBS), styrene-butadiene-isoprene-styrene block copolymers (SBIS), and hydrogenated products of styrene-butadiene-isoprene-styrene block copolymers (SEEPS).

Examples of olefin elastomers include ethylene-propylene copolymers, ethylene-butene-1 copolymers, ethylene-hexene-1 copolymers, ethylene-octene-1 copolymers, ethylene-ethyl acrylate copolymers, ethylene-methacrylate copolymers, ethylene-propylene-diene terpolymers, isoprene rubbers, nitrile rubbers, and polybutene rubbers.

Examples of commercial products include maleic anhydride-modified isoprene rubbers such as LIR-403 (commercially available from Kuraray Co., Ltd.); modified isoprene rubbers such as LIR-410 (commercially available from Kuraray Co., Ltd.); carboxy-modified nitrile rubbers such as Krynac 110, 221, and 231 (commercially available from Polysar Corporation); maleic anhydride-modified polybutenes such as Nisseki polybutene (commercially available from Nippon Oil Corporation); ethylene methacrylate copolymers such as Nucrel (commercially available from Du Pont-Mitsui Polychemicals Co., Ltd.); ethylene methacrylate copolymers such as YUKARON (commercially available from Mitsubishi Chemical Corporation); maleic anhydride-modified ethylene-propylene rubbers such as Tafmer M (MA8510 (commercially available from Mitsui Chemicals, Inc.)) and TX-1215 (commercially available from Mitsui Chemicals, Inc.); maleic anhydride-modified ethylene-butene rubbers such as Tafmer M (MH7020 (commercially available from Mitsui Chemicals, Inc.)); maleic anhydride-modified polyethylenes such as HPR series (maleic anhydride-modified EEA (commercially available from Du Pont-Mitsui Polychemicals Co., Ltd.)), Bondine (maleic anhydride-modified EEA (commercially available from Arkema)), Tuftec (maleic anhydride-modified SEBS, M1943 (commercially available from Asahi Kasei Corporation)), Kraton (maleic anhydride-modified SEBS, FG1901X (commercially available from Kraton Polymer Corporation)), Tufprene (maleic anhydride-modified SBS, 912 (commercially available from Asahi Kasei Corporation)), Septon (maleic anhydride-modified SEPS (commercially available from Kuraray Co., Ltd.)), Rexpearl (maleic anhydride-modified EEA, ET-182G, 224M, 234M (commercially available from Japan Polyolefins Corporation)), and AUROREN (maleic anhydride-modified EEA, 200S, 250S (commercially available from Nippon Paper Chemicals Co., Ltd.)); and maleic anhydride-modified polypropylenes such as Admer (QB550, LF128 (commercially available from Mitsui Chemicals, Inc.)).

Particularly preferable examples of acid-modified thermoplastic elastomers (b-1) include styrene-ethylene-butadiene-styrene copolymers modified with maleic anhydride. Examples of commercial products of acid modified-styrene-ethylene-butylene-styrene block copolymers include Tuftec M1911 (an acid value of 2 mgCH$_3$ONa/g, an MFR of 4.5 g/10 min, commercially available from Asahi Kasei Chemicals Corporation), Tuftec M1913 (an acid value of 10 mgCH$_3$ONa/g, an MFR of 5.0 g/10 min, commercially available from Asahi Kasei Chemicals Corporation), and Tuftec M1943 (an acid value of 10 mgCH$_3$ONa/g, an MFR of 8.0 g/10 min, commercially available from Asahi Kasei Chemicals Corporation).

The acid-modified thermoplastic elastomer (b-1) has a Charpy impact strength (measured according to JIS K 7111-1) of preferably 20 kJ/m$^2$ or more and more preferably 30 kJ/m$^2$ or more because it can increase the impact strength of the obtained r-CFRPs. The upper limit value of the Charpy impact strength of the acid-modified thermoplastic elastomer (b-1) is not particularly limited, and those that do not break can be preferably used.

The average MFR of the acid-modified thermoplastic elastomer (b-1) is preferably 1.0 g/10 min or more and more preferably 5.0 g/10 min or more. If the average MFR of the acid-modified thermoplastic elastomer (b-1) is within the above range, the melt viscosity during processing decreases, fiber breakage of the r-CF (A) due to processing can be minimized, and better physical properties can be exhibited.

In order to further improve both the elastic modulus and the impact strength, the amount of the acid-modified thermoplastic elastomer (b-1) added based on 100 mass% of the thermoplastic resin composition is preferably 5 to 20 mass%, more preferably 5 to 15 mass%, and still more preferably 5 to 10 mass%.

The acid value of the acid-modified thermoplastic elastomer (b-1) is preferably 0.5 to 40 mgCH$_3$ONa/g and more preferably 1 to 30 mgCH$_3$ONa/g. If the acid value of the acid-modified thermoplastic elastomer (b-1) is in a range of 0.5 to 40 mgCH$_3$ONa/g, it is possible to improve the interfacial adhesion between the r-CF (A) and the thermoplastic resin (B). Here, the acid value in the present disclosure is a value measured according to JIS K-0070.

1-1c. Optional components

The present composition may contain an inorganic filler as an optional component. Examples of inorganic fillers include silica, heat dissipating fillers, talc, calcium silicate, calcium silicate, wollastonite, montmorillonite, and hydrotalcite. In addition, as necessary, other additives added to modify resins in the related art such as weathering stabilizers, light-resistant stabilizers, anti-aging agents, antioxidants, softening agents, dispersing agents, filling agents, coloring agents, lubricants, heat-resistant stabilizers, antistatic agents, UV absorbers, and halogen-based, phosphorus-based or metal oxide flame retardants may be added. In addition, alkali metals, alkaline earth metals, zinc metal soaps, nonionic surfactants, cationic surfactants, anionic surfactants, and amphoteric surfactants may be added.

1-2. Method of producing thermoplastic resin composition

The present composition is obtained by kneading added components at a temperature at which the thermoplastic resin (B) melts. For example, the r-CF (A), the thermoplastic resin (B), and additionally, various additives and coloring agents as necessary, are added, and kneaded using a kneader, a roll mill, a super mixer, a high speed mixer, a ball mill, a sand mill, an attritor, a batch type kneading machine such as a Banbury mixer, a single-screw extruder, a twin-screw extruder, a rotor type twin-screw kneading machine or the like to form a resin composition in the form of pellets, powder, granules, or beads. A method of forming pellets using a twin-screw extruder is preferable because a kneading force is strong and subsequent molding processing is easy.

The present composition may be a masterbatch that is used by being diluted with a molding resin during molding. In addition, a required amount of the r-CF (A) may be added to the thermoplastic resin (B) to form a compound that is directly molded without being diluted with a molding resin.

The amount of the r-CF (A) added based on 100 mass% of the masterbatch is preferably 41 to 70 mass% and more preferably 50 to 65 mass%. If the amount of the r-CF (A) added is within the above range, it is possible to improve the productivity and mechanical properties of the masterbatch. In the masterbatch, as the resin for dilution during molding, those exemplified for the thermoplastic resin (B) described above can be used. It is preferable to use the same resin as the thermoplastic resin (B) used for dispersing the r-CF (A) because it has excellent compatibility. Since the present composition has excellent dispersibility of the r-CF (A), it can be stably molded even when made into a resin composition with a high concentration such as a masterbatch.

When the present composition is made into a compound, the amount of the r-CF (A) added based on 100 mass% of the compound is preferably 10 to 40 mass% and more preferably 15 to 35 mass%. If the amount of the r-CF (A) added is within the above range, it is possible to achieve both the productivity and moldability of the compound.

1-3. Molded body

A molded body according to the first embodiment is molded from the present composition. The molding method is not particularly limited, and for example, a molded body can be produced by extrusion molding, injection molding, blow molding or the like. Since the present composition has excellent strength and excellent moldability, it is also suitable for molding injection molded bodies such as automobile parts having complicated shapes.

2. Second embodiment

2-1. Thermoplastic resin composition

A thermoplastic resin composition according to a second embodiment (hereinafter also referred to as the present composition in the second embodiment) is a thermoplastic resin composition for carbon fiber reinforcement containing a recycled carbon fiber (A) and a thermoplastic resin (B), and the oxygen content in the recycled carbon fiber (A) is 5.0 mass% or more. The thermoplastic resin (B) has an average solubility parameter of 9 to 15, and contains at least one of an acrylic resin (ii-B 1) and a styrenic resin (ii-B2), and the glass transition temperature of the acrylic resin (ii-B1) and the styrenic resin (ii-B2) is 0°C or higher.

The inventors conducted extensive studies and as a result, found that, when an r-CF (A) having an oxygen content of 5.0 mass% or more is combined with a thermoplastic resin (B) having an average solubility parameter of 9 to 15 and containing at least one of an acrylic resin (ii-B1) and a styrenic resin (ii-B2) and in which the glass transition temperature of the acrylic resin (ii-B1) and the styrenic resin (ii-B2) is 0°C or higher, it is possible to significantly improve the compatibility between the resin and the recycled carbon fiber and to improve the adhesion between the resin and the recycled carbon fiber.

According to the present composition, the impact strength, the productivity and the elastic modulus are improved. In addition, according to excellent compatibility between the resin and the recycled carbon fiber, it is possible to reduce the occurrence of deposits on a die of a production facility. When the occurrence of deposits is reduced, it is possible to prevent problems such as mixing of deposits into the product, clogging of holes in the die with deposits, and causing material discharge failures, and thus it is possible to improve the productivity. In addition, when the adhesion between the thermoplastic resin (B) and the r-CF (A) is improved, it is possible to increase the elastic modulus. As a result, parts which have been made of metal materials can be expected to be replaced with r-CFRPs, which have excellent lightweight properties. That is, even if recycled carbon fibers are used, it is possible to provide a thermoplastic resin composition containing recycled carbon fibers having excellent productivity and excellent impact resistance and a molded body thereof. Hereinafter, respective components will be described.

2-1a. Recycled carbon fiber (A)

For an r-CF (recycled carbon fiber) according to the second embodiment, description thereof will be omitted with reference to the above description of 1-1a. r-CF.

When a thermoplastic resin (B) according to the second embodiment which has a solubility parameter of 9 to 15 and also contains at least one of an acrylic resin and a styrenic resin and in which the glass transition temperature of the acrylic resin (ii-B 1) and the styrenic resin (ii-B2) is 0°C or higher is combined with an r-CF (A), it is possible to significantly improve their mutual compatibility. Similarly, when the diffraction intensity of the (002) plane of the r-CF (A) is lowered, it is possible to improve the adhesion to the thermoplastic resin (B) according to the second embodiment.

2-1b. Thermoplastic resin (B)

The thermoplastic resin (B) according to the second embodiment has an average solubility parameter of 9 to 15. In addition, the thermoplastic resins (B) can be used alone or two or more thereof can be used in combination, and contain at least one of an acrylic resin (ii-B 1) having a glass transition temperature of 0°C or higher and a styrenic resin (ii-B2) having a glass transition temperature of 0°C or higher.

When two or more thermoplastic resins are used, the solubility parameter of each thermoplastic resin does not need to be in a range of 9 to 15, and the average solubility parameter when the thermoplastic resins to be used are blended may be in a range of 9 to 15.

When a thermoplastic resin (B) having an average solubility parameter of 9 to 15 and a glass transition temperature of 0°C or higher and containing at least one of the acrylic resin (ii-B1) and the styrenic resin (ii-B2) is combined with an r-CF (A) having an oxygen content of 5.0 mass% or more, as described above, it is possible to significantly increase the compatibility between the r-CF (A) and the thermoplastic resin (B) and improve the adhesion. As a result, it is possible to improve the impact resistance. A more preferable range of the solubility parameter of the thermoplastic resin (B) is 9 to 12.

In order to more effectively increase the impact resistance, it is more preferable that the solubility parameter of each resin used for the thermoplastic resin (B) satisfy 9 to 15.

The thermoplastic resin (B) may be used in combination with a resin other than the acrylic resin (ii-B 1) or the styrenic resin (ii-B2), which has a solubility parameter of 9 to 15 as long as effects of the second embodiment are not obstructed, and it is preferable that the main component be at least one of the acrylic resin (ii-B 1) and the styrenic resin (ii-B2). If the average solubility parameter is within this range, an acrylic resin other than the acrylic resin (ii-B 1) and the styrenic resin (ii-B2) or other thermoplastic resins such as a styrenic resin may be used in combination.

The main component refers to a thermoplastic resin of which the content is the largest among components constituting the thermoplastic resin (B).

Even if a recycled carbon fiber (A) is used, the content of the acrylic resin (ii-B1) or the styrenic resin (ii-B2) based on 100 mass% of the thermoplastic resin (B) is preferably 52 to 95 mass%, more preferably 55 to 100 mass%, and still more preferably 60 to 90 mass% because a thermoplastic resin composition having excellent productivity and excellent impact resistance can be formed. Here, the content is a total content when both the acrylic resin (ii-B1) and the styrenic resin (ii-B2) are included.

The glass transition temperature of the acrylic resin (ii-B 1) and the styrenic resin (ii-B2) is 0°C or higher, preferably 0°C or higher and 140°C or lower, and more preferably 25 to 130°C.

Accordingly, it is possible to satisfy high productivity and mechanical properties.

The glass transition temperature in this specification is a value determined using a differential scanning calorimeter (DSC) according to JIS K 7121:2012.

In consideration of high productivity and mechanical properties, the solubility parameter of the acrylic resin (ii-B1) and the styrenic resin (ii-B2) contained in the thermoplastic resin (B) is preferably 9 to 15 and more preferably 9 to 12.

The average MFR of the thermoplastic resin (B) is preferably 10 g/min or more and more preferably 20 g/min or more. If the average MFR of the thermoplastic resin (B) is set to 10 g/min or more, the melt viscosity when the r-CF (A) and the thermoplastic resin (B) are kneaded decreases, breakage of the r-CF (A) can be minimized, and thus high mechanical properties can be exhibited. The upper limit value of the average MFR of the thermoplastic resin (B) is not particularly limited, and is generally 200 g/min or less in consideration of availability.

[Acrylic resin (ii-B1)]

The acrylic resin (ii-B 1) is an acrylic resin having a glass transition temperature of 0°C or higher and can be obtained by polymerizing (meth)acrylic monomers. Examples of monomers (meth)acrylic monomers having an alkyl group, (meth)acrylic monomers having a hydroxyl group, (meth)acrylic monomers having a carboxyl group, (meth)acrylic monomers having a glycidyl group, and acrylic monomers having a vinyl ester group such as vinyl acetate and vinyl propionate. Among these, a polymethyl methacrylate (PMMA) resin, which is a methyl methacrylate polymer, is preferable because it can achieve a high elastic modulus.

Specific examples of acrylic resins (ii-B1) include ACRYPET TF-9 (commercially available from Mitsui Chemicals Inc, solubility parameter: 9.2, an MFR of 20 g/10 min).

[Styrenic resin (ii-B2)]

The styrenic resin (ii-B2) is a styrenic resin having a glass transition temperature of 0°C or higher, and is a resin containing styrenic monomers as monomers. Examples thereof include styrenic resins obtained by copolymerizing homopolymers of styrenic monomers, and also, other vinyl monomers that are copolymerizable therewith as necessary, rubber polymers or the like.

Examples of styrenic monomers include styrene derivatives such as styrene, $\alpha$-methylstyrene, o-methylstyrene, p-methylstyrene, vinylxylene, ethylstyrene, dimethylstyrene, p-tert-butylstyrene, vinylnaphthalene, methoxystyrene, monobromostyrene, dibromostyrene, fluorostyrene, and tribromostyrene, and styrene is particularly preferable in consideration of excellent moldability.

Examples of other vinyl monomers that are copolymerizable with styrenic monomer include vinyl cyanide compounds such as acrylonitrile and methacrylonitrile, aryl esters of acrylic acid such as phenyl acrylate and benzyl acrylate, alkyl esters of acrylic acid such as methyl acrylate, ethyl acrylate, propyl acrylate, butyl acrylate, amyl acrylate, hexyl acrylate, 2-ethylhexyl acrylate, octyl acrylate, cyclohexyl acrylate, and dodecyl acrylate, aryl esters of methacrylic acid such as phenyl methacrylate and benzyl methacrylate, alkyl esters of methacrylic acid such as methyl methacrylate, ethyl methacrylate, propyl methacrylate, butyl methacrylate, amyl methacrylate, hexyl methacrylate, 2-ethylhexyl methacrylate, octyl methacrylate, cyclohexyl methacrylate, and dodecyl methacrylate, epoxy group-containing methacrylic acid esters such as glycidyl methacrylate, maleimide monomers such as maleimide, N-methyl maleimide, and N-phenyl maleimide, and $\alpha,\beta$-unsaturated carboxylic acids such as acrylic acid, methacrylic acid, maleic acid, maleic anhydride, phthalic acid, and itaconic acid and their anhydrides.

Examples of rubber polymers that are copolymerizable with styrenic monomers include diene copolymers such as polybutadiene, polyisoprene, styrene-butadiene random copolymers and block copolymers, acrylonitrile-butadiene copolymer, copolymers of acrylic acid alkyl ester or methacrylic acid alkyl ester and butadiene, and butadiene-isoprene copolymers, copolymers of ethylene and $\alpha$-olefin such as ethylene-propylene random copolymers and block copolymers, and ethylene-butene random copolymers and block copolymers, copolymers of ethylene and unsaturated carboxylic acid ester such as ethylene-methyl-methacrylate copolymers and ethylene butyl acrylate copolymers, copolymers of ethylene and aliphatic vinyl such as ethylene-vinyl acetate copolymers, ethylene-propylene-non-conjugated diene terpolymers such as ethylene-propylene-hexadiene copolymers, acrylic rubbers such as polybutyl acrylate, and composite rubbers having a structure in which a polyorganosiloxane rubber component and a polyalkyl(meth)acrylate rubber component are entangled each other so that they cannot be separated.

Examples of styrenic resins composed of these monomers include resins such as polystyrene, styrene-butadiene-styrene copolymers (SBS), high impact polystyrene (HIPS), acrylonitrile-styrene copolymers (AS resin), acrylonitrile-butadiene-styrene copolymers (ABS resin), methyl methacrylate-butadiene-styrene copolymers (MBS resin), methyl methacrylate-acrylonitrile-butadiene-styrene copolymers (MABS resin), acrylonitrile-acrylic rubber-styrene copolymers (AAS resin), acrylonitrile-ethylenepropylene rubber-styrene copolymers (AES resin) and styrene-IPN type rubber copolymers, and mixtures thereof.

In addition, examples of rubber polymers that are copolymerizable with styrenic monomers include polymers made of polybutadiene or polyisoprene and having hydrogenated unsaturated bonds. Specific examples in such a case include hydrogenated styrene-butadiene-styrene copolymers (hydrogenated SBS), and hydrogenated styrene-isoprene-styrene copolymers (SEPS).

Among these, acrylonitrile-styrene copolymers (AS resin) or acrylonitrile-butadiene-styrene copolymers (ABS resin) are preferable because they have favorable compatibility with the r-CF (A), and acrylonitrile-butadiene-styrene copolymers (ABS resin) are more preferable because they have favorable impact resistance.

Specific examples of AS resins include Cevian 090SF (commercially available from Daicel Miraizu Ltd., solubility parameter, an MFR of 23 g/10 min). Specific examples of ABS resins include Cevian T-500SF (commercially available from Daicel Miraizu Ltd., an MFR of 25 g/10 min).

2-1b-1. Acid-modified thermoplastic elastomer (b-1)

The thermoplastic resin (B) of the present composition may contain an acid-modified thermoplastic elastomer (b-1). For the acid-modified thermoplastic elastomer (b-1) according to the second embodiment, description thereof will be omitted with reference to the above description of 1-lb-1 Acid-modified thermoplastic elastomer (b-1) except for details described below.

When the acid-modified thermoplastic elastomer (b-1) is used in the second embodiment, the content of the acid-modified thermoplastic elastomer (b-1) based on 100 mass% of the thermoplastic resin (B) is preferably 3 to 40 mass%, more preferably 5 to 35 mass%, and still more preferably 7 to 30 mass% because it is possible to achieve both the elastic modulus and the impact strength.

In addition, the glass transition temperature of the acid-modified thermoplastic elastomer (b-1) is preferably lower than 0°C.

2-1c. Optional components

For optional components of the present composition, description thereof will be omitted with reference to the above description of 1-lc. Optional components.

2-2. Method of producing thermoplastic resin composition

For a method of producing the present composition, description thereof will be omitted with reference to the above description of 1-2 Method of producing thermoplastic resin composition.

2-3. Molded body

For a molded body according to the second embodiment, description thereof will be omitted with reference to the above description of 1-3 Molded body.

3. Third embodiment

3-1. Thermoplastic resin composition

A thermoplastic resin composition according to a third embodiment (hereinafter also referred to as the present composition in the third embodiment) is a thermoplastic resin composition for carbon fiber reinforcement containing a recycled carbon fiber (A) and a thermoplastic resin (B). The oxygen content in the recycled carbon fiber (A) is 5.0 mass% or more, and the acid value of the recycled carbon fiber (A) is 0.002 to 0.080 mmol/g. In addition, the thermoplastic resin (B) has an average flow start temperature of 250°C or lower and contains at least one of the polyester resin (iii-B 1) and the polycarbonate resin (iii-B2).

The inventors conducted extensive studies and as a result, found that, when an r-CF (A) in which the oxygen content of the recycled carbon fiber (A) is 5.0 mass% or more and the acid value is 0.002 to 0.080 mmol/g is combined with a thermoplastic resin (B) having an average flow start temperature of 250°C or lower and containing at least one of a polyester resin (iii-B 1) and a polycarbonate resin (iii-B2), it is possible to significantly improve the compatibility between the resin and the recycled carbon fiber and to improve the adhesion between the resin and the recycled carbon fiber.

According to the thermoplastic resin composition of the present embodiment, the impact strength, the productivity and the elastic modulus are improved. In addition, according to excellent compatibility between the resin and the recycled carbon fiber, it is possible to reduce the occurrence of deposits on a die of a production facility. When the occurrence of deposits is reduced, it is possible to prevent problems such as mixing of deposits into the product, clogging of holes in the die with deposits, and causing material discharge failures, and thus it is possible to improve the productivity. In addition, when the adhesion between the thermoplastic resin (B) and the r-CF (A) is improved, it is possible to increase the elastic modulus. As a result, parts which have been made of metal materials can be expected to be replaced with r-CFRPs, which have excellent lightweight properties. Hereinafter, respective components will be described.

3-la. Recycled carbon fiber (A)

The r-CF (recycled carbon fiber) according to the third embodiment has an oxygen content of 5.0 mass% or more in the r-CF (A) and an acid value of 0.002 to 0.080 mmol/g. When a thermoplastic resin (B) having an average flow start temperature of 250°C or lower and containing at least one of the polyester resin (iii-B 1) and the polycarbonate resin (iii-B2) to be described below is combined with the r-CF (A) having an oxygen content of 5.0 mass% or more and an acid value of 0.002 to 0.080 mmol/g, it is possible to significantly improve their mutual compatibility.

In order to maintain a favorable strength of the thermoplastic resin composition, the upper limit value of the acid value of the r-CF (A) is preferably 0.080 mmol/g or less. A more preferable range is 0.005 to 0.060 mmol/g.

For the r-CF (recycled carbon fiber) according to the third embodiment, description thereof will be omitted with reference to the above description of 1-1a r-CF except for details described above.

3-1b. Thermoplastic resin (B)

The thermoplastic resin (B) according to the third embodiment has an average flow start temperature of 250°C or lower. In addition, the thermoplastic resins (B) can be used alone or two or more thereof can be used in combination, and the thermoplastic resin (B) contains at least one of the polyester resin (iii-B 1) and the polycarbonate resin (iii-B2).

When two or more thermoplastic resins are used, the flow start temperature of each thermoplastic resin does not need to be in a range of 250°C or lower, and the average flow start temperature when the thermoplastic resins to be used are blended may be in a range of 250°C or lower.

Here, the flow start temperature is a temperature at which the melt viscosity of the thermoplastic resin is 4,800 Pa·s or less when it passes through a capillary with a die hole diameter $\varphi$ of 1 mm and a die length of 1 mm under a pressure of 9.8 MPa in the evaluation of the melt viscosity using a flow tester.

The lower limit value of the average flow start temperature of the thermoplastic resin (B) is not particularly limited. A more preferable range is 220 to 240°C. When a thermoplastic resin (B) having an average flow start temperature of 250°C or lower and containing at least one of the polyester resin (iii-B 1) and the polycarbonate resin (iii-B2) is combined with the r-CF (A) according to the third embodiment, it is possible to obtain high productivity and mechanical properties.

When there are two or more types of thermoplastic resin (B), it is sufficient that the average flow start temperature of the thermoplastic resins (B) after blending satisfy 250°C or lower, and in order to improve mechanical properties more effectively, it is more preferable that the flow start temperature of each resin used for the thermoplastic resin (B) satisfy 250°C or lower.

The thermoplastic resin (B) has a Charpy impact strength (measured according to JIS K 7111-1) of preferably 3 kJ/m$^2$ or more and more preferably 5 kJ/m$^2$ or more because it can increase the impact strength of the obtained r-CFRPs. The upper limit value of the Charpy impact strength of the thermoplastic resin (B) is not particularly limited, and those that do not break can be preferably used.

In consideration of fluidity, the content of the polyester resin (iii-B 1) or the polycarbonate resin (iii-B2) in the thermoplastic resin (B) based on 100 mass% of the thermoplastic resin (B) is preferably 50 to 100 mass%, more preferably 52 to 95 mass%, and still more preferably 60 to 90 mass. Here, the content is a total content when both the polyester resin (iii-B 1) and the polycarbonate resin (iii-B2) are included.

In consideration of high productivity and mechanical properties, the flow start temperature of the polyester resin (iii-B 1) or the polycarbonate resin (iii-B2) contained in the thermoplastic resin (B) is preferably 250°C or lower and more preferably 220 to 240°C.

As preferable polyester resins (iii-B 1), for example, thermoplastic resins composed of saturated dicarboxylic acids and saturated dihydric alcohols can be used.

As the saturated dicarboxylic acids, aromatic dicarboxylic acids such as terephthalic acid, isophthalic acid, phthalic acid, naphthalene-1,4- or 2,6-dicarboxylic acid, diphenyl ether-4,4'-dicarboxylic acid, diphenyldicarboxylic acids, and diphenoxyethanediethanedicarboxylic acids, aliphatic dicarboxylic acids such as adipic acid, sebacic acid, azelaic acid, and decane-1,10-dicarboxylic acid, alicyclic dicarboxylic acids such as cyclohexanedicarboxylic acid and the like can be used.

As the saturated dihydric alcohols, aliphatic glycols such as ethylene glycol, propylene glycol, trimethylene glycol, tetramethylene glycol, diethylene glycol, polyethylene glycol, polypropylene glycol, polytetramethylene glycol, hexamethylene glycol, dodecamethylene glycol, and neopentyl glycol, alicyclic glycols such as cyclohexane dimethanol, 2,2-bis(4'-β-hydroxyethoxyphenyl)propane, other aromatic diols and the like can be used.

Specific examples of preferable polyester resins (iii-B 1) include PET-G, I-PET, polybutylene terephthalate (PBT), polycyclohexene dimethylene terephthalate (PCT), and polytrimethylene terephthalate (PTT).

As the polycarbonate resin (iii-B2), for example, a resin that is easily produced by reacting an aromatic dihydroxy compound with a carbonate precursor such as phosgene or carbonic acid diester can be used. The resin can be produced by known reactions, for example, an interface method when phosgene is used and a transesterification method in which the resin is reacted in a molten state when carbonic acid diester is used.

Examples of aromatic dihydroxy compounds include bis(hydroxyaryl)alkanes such as 2,2-bis(4-hydroxyphenyl)propane (bisphenol A), bis(4-hydroxyphenyl)methane, 1,1-bis(4-hydroxyphenyl)ethane, 2,2-bis(4-hydroxyphenyl)butane, 2,2-bis(4-hydroxyphenyl)octane, bis(4-hydroxyphenyl)phenylmethane, 2,2-bis(4-hydroxy-3-methylphenyl)propane, 1,1-bis(4-hydroxy-3-t-butylphenyl)propane, 2,2-bis(4-hydroxy-3-bromophenyl)propane, 2,2-bis(4-hydroxy-3,5-dibromophenyl)propane, and 2,2-bis(4-hydroxy-3,5-dichlorophenyl)propane, bis(hydroxyaryl)cycloalkanes such as 1,1-bis(4-hydroxyphenyl)cyclopentane, and 1,1-bis(4-hydroxyphenyl)cyclohexane, dihydroxy diaryl ethers such as 4,4'-dihydroxy diphenyl ether, and 4,4'-dihydroxy-3,3'-dimethyl diphenyl ether, dihydroxy diaryl sulfides such as 4,4'-dihydroxy diphenyl sulfide, and 4,4'-dihydroxy-3,3'-dimethyl diphenyl sulfide, dihydroxy diaryl sulfoxides such as 4,4'-dihydroxy diphenyl sulfoxide, and 4,4'-dihydroxy-3,3'-dimethyl diphenyl sulfoxide, and dihydroxy diarylsulfones such as 4,4'-dihydroxy diphenylsulfone, and 4,4'-dihydroxy-3,3'-dimethyl diphenylsulfone. These may be used alone or two or more thereof may be used in combination. In addition to these, piperazine, dipiperidyl hydroquinone, resorcinol, and 4,4'-dihydroxy diphenyls may be used in combination. In addition, it is also possible to use a branched aromatic polycarbonate resin in combination with a polyfunctional compound such as phloroglucin.

Examples of carbonate precursors to be reacted with aromatic dihydroxy compounds include diaryl carbonates such as phosgene, diphenyl carbonate and ditolyl carbonate, and dialkyl carbonates such as dimethyl carbonate and diethyl carbonate.

The average MFR of the thermoplastic resin (B) is preferably 10 g/min or more and more preferably 20 g/min or more. If the average MFR of the thermoplastic resin (B) is set to 10 g/min or more, the melt viscosity when the r-CF (A) and the thermoplastic resin (B) are kneaded decreases, breakage of the r-CF (A) can be minimized, and thus high mechanical properties can be exhibited. The upper limit value of the average MFR of the thermoplastic resin (B) is not particularly limited, and is generally 200 g/min or less in consideration of availability.

3-1b-1. Acid-modified thermoplastic elastomer (b-1)

The thermoplastic resin (B) of the present composition may contain an acid-modified thermoplastic elastomer (b-1). For the acid-modified thermoplastic elastomer (b-1) according to the third embodiment, description thereof will be omitted with reference to the above description of 1-1b-1 Acid-modified thermoplastic elastomer (b-1).

3-1c. Optional components

For optional components of the present composition, description thereof will be omitted with reference to the above description of 1-1c Optional components.

3-2. Method of producing thermoplastic resin composition

For a method of producing the present composition, description thereof will be omitted with reference to the above description of 1-2 Method of producing thermoplastic resin composition.

3-3. Molded body

For a molded body according to the third embodiment, description thereof will be omitted with reference to the above description of 1-3 Molded body.

4. Fourth embodiment

4-1. Thermoplastic resin composition

A thermoplastic resin composition according to a fourth embodiment (hereinafter also referred to as the present composition in the fourth embodiment) is a thermoplastic resin composition for carbon fiber reinforcement containing a recycled carbon fiber (A) and a thermoplastic resin (B). The oxygen content in the recycled carbon fiber (A) is 5.0 mass% or more. The thermoplastic resin (B) contains a polyolefin resin having a melting point of 100°C or higher (excluding acid-modified thermoplastic resins) (iv-B) and at least one of an acid-modified polypropylene (iv-b-1) and a thermoplastic elastomer (iv-b-2). The melting point of the acid-modified polypropylene (iv-b-1) is 130°C or higher.

The inventors conducted extensive studies, and as a result, found that, if an r-CF (A) having an oxygen content of 5.0 mass% or more is combined with a thermoplastic resin (B) containing a polyolefin resin having a melting point of 100°C or higher (excluding acid-modified thermoplastic resins) (iv-B) (hereinafter simply referred to as a polyolefin resin (iv-B)), and at least one of an acid-modified polypropylene (iv-b-1) and a thermoplastic elastomer (iv-b-2), it is possible to significantly improve the compatibility between the polyolefin resin and the recycled carbon fiber and to improve the adhesion between the polyolefin resin and the recycled carbon fiber. According to the present composition, the tensile strength, the elastic modulus, the impact strength, the temperature of deflection under load and the productivity are improved. In addition, according to excellent compatibility between the resin and the recycled carbon fiber, it is possible to reduce the occurrence of deposits on a die of a production facility. When the occurrence of deposits is reduced, it is possible to prevent problems such as mixing of deposits into the product, clogging of holes in the die with deposits, and causing material discharge failures, and thus it is possible to improve the productivity. In addition, when the adhesion between the thermoplastic resin (B) and the r-CF (A) is improved, it is possible to increase the tensile strength, the elastic modulus, the impact strength and the temperature of deflection under load. As a result, parts which have been made of metal materials can be expected to be replaced with r-CFRPs, which have excellent lightweight properties. Hereinafter, respective components will be described.

4-1a. Recycled carbon fiber (A)

For an r-CF (recycled carbon fiber) according to the fourth embodiment, description thereof will be omitted with reference to the above description of 1-1a r-CF.

4-1b. Thermoplastic resin (B)

The thermoplastic resin (B) according to the fourth embodiment contains the polyolefin resin (iv-B) and at least one of the acid-modified polypropylene (iv-b-1) and the thermoplastic elastomer (iv-b-2). The melting point of the acid-modified polypropylene (iv-b-1) is 130°C or higher.

Among these, it is preferable to contain the acid-modified polypropylene (iv-b-1) and the thermoplastic elastomer (E) because they can improve the adhesion to the r-CF (A).

"Acid-modified thermoplastic resin" is a thermoplastic resin into which an acidic functional group is introduced by graft polymerization or the like.

In addition, a thermoplastic resin other than the polyolefin resin (iv-B), the acid-modified polypropylene (iv-b-1) and the thermoplastic elastomer (iv-b-2) may be used as long as effects of the present invention are not obstructed, and it is preferable that the main component be a polyolefin resin having a melting point of 100°C or higher (excluding acid-modified thermoplastic resins).

The main component refers to a thermoplastic resin of which the content is the largest among components constituting the thermoplastic resin (B).

The melting point of the polyolefin resin (iv-B) having a melting point of 100°C or higher is preferably 100 to 180°C and more preferably 105 to 170°C. If the melting point is within the above range, since the compatibility between the acid-modified polypropylene (iv-b-1) and the thermoplastic elastomer (iv-b-2) to be described below is improved, and the dispersibility of the acid-modified polypropylene (iv-b-1) and the thermoplastic elastomer (iv-b-2) in the polyolefin resin is improved, the adhesion between the thermoplastic resin (B) and the r-CF (A) is excellent.

The melting point in this specification is a value measured by a differential scanning calorimetry (DSC) method (a measured value obtained using a differential scanning calorimeter DSC6200 (commercially available from Seiko Instruments Inc.) at a heating rate of 10°C/min).

The content of the polyolefin resin (iv-B) having a melting point of 100°C or higher in the thermoplastic resin (B) based on 100 mass% of the thermoplastic resin (B) is preferably 50 to 99 mass%, more preferably 52 to 98 mass%, and still more preferably 55 to 97 mass% because it can increase the strength and the elastic modulus.

[Polyolefin resin (iv-B)]

Examples of polyolefin resins (iv-B) include (co)polymers of homopolymers of an α-olefin having about 2 to 8 carbon atoms such as ethylene, propylene, and 1-butene or their α-olefins, and other α-olefins having about 2 to 18 carbon atoms such as ethylene, propylene, 1-butene, 3-methyl-1-butene, 1-pentene, 4-methyl-1-pentene, 4,4-dimethyl-1-pentene, 1-hexene, 4-methyl-1-hexene, 1-heptene, 1-octene, 1-decene, and 1-octadecene.

The polyolefin resin (iv-B) is not limited as long as it has a melting point of 100°C or higher.

Specific examples of propylene resins include ethylene homopolymers such as linear low density polyethylene resins (LLDPE), low density polyethylene resins (LDPE), and high density polyethylene resins (HDPE), ethylene copolymers of ethylene resins such as ethylene-propylene copolymers, ethylene-1-butene copolymers, ethylene-propylene-1-butene copolymers, ethylene-4-methyl-1-pentene copolymers, ethylene-1-hexene copolymers, ethylene-1-heptene copolymers, and ethylene-1-octene copolymers, and propylene copolymers such as propylene homopolymers (homo PP), propylene-ethylene block copolymers (block PP), propylene-ethylene random copolymers (random PP), propylene-ethylene-1-butene copolymers, propylene-ethylene-4-methyl-1-pentene copolymers, and propylene-ethylene-1-hexene copolymers. These polyolefin resins may be used alone or two or more thereof may be used in combination. Propylene resins are preferable because they can achieve high mechanical properties, and particularly, propylene homocopolymers (homo PP) are more preferable because they can increase the temperature of deflection under load.

The MFR (melt flow rate) of the thermoplastic resin (B) in this specification is preferably 0.1 to 100 g/10 min, more preferably 10 to 80 g/10 min, and still more preferably 20 to 60 g/10 min. If the MFR of the thermoplastic resin (B) is within the above range, better physical properties can be exhibited without causing breakage of the r-CF (A) during kneading. Here, the MFR in the present invention is a value measured according to JIS K-7210-1:2014.

Specific examples of thermoplastic resins include Prime polypro J229E (random PP, an MFR of 50 g/10 min, commercially available from Prime polymer), Prime polypro J708UG (block PP, an MFR of 45 g/10 min), and SunAllomer PM900A (commercially available from SunAllomer Ltd., homo PP, an MFR of 30 g/10 min).

[Acid-modified polypropylene (iv-b-1)]

When the acid-modified polypropylene (iv-b-1) is used, the adhesion between the r-CF (A) and the thermoplastic resin (B) is improved. The acid-modified polypropylene (iv-b-1) is an acid-modified polypropylene having a melting point of 130°C or higher determined by a DSC method, and is a propylene resin into which an acidic functional group is introduced by graft polymerization or the like. Examples of acidic functional groups include cyclic acid anhydrides such as succinic anhydride, maleic anhydride, glutaric anhydride, and phthalic anhydride. The melting point of the acid-modified polypropylene (iv-b-1) is preferably 130 to 200°C and more preferably 135 to 180°C. When an acid-modified polypropylene having a melting point in the above range is used, the difference in the melting point between the thermoplastic resin (B) and other components is reduced, and the dispersibility of the acid-modified polypropylene (iv-b-1) in the thermoplastic resin (B) is improved. Therefore, the adhesion between the thermoplastic resin (B) and the r-CF (A) is improved.

The melting point in this specification is a value measured by a differential scanning calorimetry (DSC) method (a measured value obtained using a differential scanning calorimeter DSC6200 (commercially available from Seiko Instruments Inc.) at a heating rate of 10°C/min).

In addition, in the acid-modified polypropylene (iv-b-1) according to the fourth embodiment, the melt viscosity $\eta c$ at 220°C and a shear rate of $1.2 \times 10^3$ sec$^{-1}$ is preferably 1 to 500 Pa·s, more preferably 10 to 500 Pa·s, still more preferably 20 to 400 Pa·s, and yet more preferably 50 to 300 Pa·s. If the melt viscosity at 220°C is within the above range, since the difference in the melt viscosity between it and the thermoplastic resin (B) during kneading is reduced, and the dispersibility of the acid-modified polypropylene (iv-b-1) is improved, it is possible to improve the interfacial adhesion between the r-CF (A) and the thermoplastic resin (B). In addition, the elastic modulus and the temperature of deflection under load are further improved, and even when recycled carbon fibers are used, a molded body containing recycled carbon fibers with excellent productivity and excellent impact resistance can be obtained.

The melt viscosity in this specification is a value measured at 220°C and a shear rate of $1.2 \times 10^3$ sec$^{-1}$ according to JIS K 7199:1999.

The acid value of the acid-modified polypropylene (iv-b-1) resin is preferably 0.1 to 100 mg KOH/g and more preferably 1 to 50 mg KOH/g. If the acid value of the acid-modified polypropylene (iv-b-1) is within the above range, it is possible to improve the interfacial adhesion between the r-CF (A) and the thermoplastic resin (B) without r-CF (A) aggregation.

Here, the acid value in this specification is a value measured according to JIS K-0070.

In order to achieve both the tensile strength and the temperature of deflection under load, the amount of the acid-modified polypropylene (iv-b-1) added based on 100 mass% of the thermoplastic resin composition is preferably 1 to 40 mass%, more preferably 1 to 30 mass%, and still more preferably 5 to 20 mass%.

If the amount of the acid-modified polypropylene (iv-b-1) added is within this range, it is possible to improve the interfacial adhesion between the r-CF (A) and the thermoplastic resin (B), and the generation of deposits at the tip of the die can be minimized.

The amount of the acid-modified polypropylene (iv-b-1) added with respect to 100 parts by mass of the polyolefin resin is preferably 3 to 80 parts by mass, more preferably 5 to 75 parts by mass, and still more preferably 10 to 40 parts by mass. If the amount of the acid-modified polypropylene (iv-b-1) added with respect to the polyolefin resin (iv-B) is within the above range, it is possible to achieve both the strength and the temperature of deflection under load.

Specific examples of acid-modified polypropylene (iv-b-1) include Admer QB550 (commercially available from Mitsui Chemicals, Inc., a melt viscosity of 200 MPa·s, an acid value of 2.3 mgKOH/g), Modic P-908 (commercially available from Mitsubishi Chemical Corporation, a melt viscosity of 150 MPa·s, acid value: 12.8 mgKOH/g).

The acid value of the acid-modified polypropylene (iv-b-1) is measured and obtained according to JIS K-0070.

[Thermoplastic elastomer (iv-b-2)]

The thermoplastic elastomer (iv-b-2) is added in order to improve the adhesion between the r-CF (A) and the thermoplastic resin (B). The thermoplastic elastomers (iv-b-2) can be classified into acid-modified thermoplastic elastomers (iv-b-2x) and non-acid-modified thermoplastic elastomers (iv-b-2y).

The acid-modified thermoplastic elastomer (iv-b-2x) is preferable in order to further improve the adhesion to the r-CF (A).

Here, "thermoplastic elastomer" in this specification is a polymer that softens and becomes plastic when heated to an appropriate temperature and exhibits elasticity when cooled, and does not exhibit a melting point according to a DSC method. When the r-CF (A), a polyolefin resin as the thermoplastic resin (B) and the thermoplastic elastomer (iv-b-2) are contained, it is possible to produce a thermoplastic resin composition with significantly improved compatibility and high impact resistance.

"Acid-modified thermoplastic elastomer" is a thermoplastic elastomer to which an acidic functional group is introduced by graft polymerization or the like. Preferable examples of acid-modified thermoplastic elastomers include acid-modified styrenic elastomers and acid-modified olefin elastomers. Acid modification refers to introduction of a cyclic acid anhydride group or a carboxylic acid group to a copolymer side chain using, for example, a cyclic acid anhydride such as succinic anhydride, maleic anhydride, glutaric anhydride, or phthalic anhydride.

The acid value of the acid-modified thermoplastic elastomer (iv-b-2x) is preferably 0.5 to 40 $mgCH_3ONa/g$ and more preferably 1 to 30 $mgCH_3ONa/g$. If the acid value of the acid-modified thermoplastic elastomer (iv-b-2x) is in a range of 0.5 to 40 $mgCH_3ONa/g$, it is possible to improve the interfacial adhesion between the r-CF (A) and the thermoplastic resin (B).

Examples of styrenic elastomers include block copolymers composed of a polystyrene block and an elastomer block having a polyolefin structure. Specific examples include styrene-isoprene-styrene block copolymers (SIS), hydrogenated products of styrene-ethylene-butylene-styrene block copolymers (SEPS), styrene-butylene-styrene block copolymers (SBS), hydrogenated products of styrene-ethylene-butylene-styrene block copolymers (SEBS), styrene-butadiene-isoprene-styrene block copolymers (SBIS), and hydrogenated products of styrene-butadiene-isoprene-styrene block copolymers (SEEPS).

Examples of olefin elastomers include ethylene-propylene copolymers, ethylene-butene-1 copolymers, ethylene-hexene-1 copolymers, ethylene-octene-1 copolymers, ethylene-ethyl acrylate copolymers, ethylene-methacrylate copolymers, ethylene-propylene-diene terpolymers, isoprene rubbers, nitrile rubbers, and polybutene rubbers.

Examples of commercial products of acid-modified thermoplastic elastomers (iv-b-2x) include maleic anhydride-modified isoprene rubbers such as LIR-403 (commercially available from Kuraray Co., Ltd.); modified isoprene rubbers such as LIR-410 (commercially available from Kuraray Co., Ltd.); carboxy-modified nitrile rubbers such as Krynac 110, 221, and 231 (commercially available from Polysar Corporation); maleic anhydride-modified polybutenes such as Nisseki polybutene (commercially available from Nippon Oil Corporation); ethylene methacrylate copolymers such as Nucrel (commercially available from Du Pont-Mitsui Polychemicals Co., Ltd.); ethylene methacrylate copolymers such as YUKARON (commercially available from Mitsubishi Chemical Corporation); maleic anhydride-modified ethylene-propylene rubbers such as Tafmer M (MA8510 (commercially available from Mitsui Chemicals, Inc.)) and TX-1215 (commercially available from Mitsui Chemicals, Inc.); maleic anhydride-modified ethylene-butene rubbers such as Tafmer M (MH7020 (commercially available from Mitsui Chemicals, Inc.)); and maleic anhydride-modified polyethylenes such as HPR series (maleic anhydride-modified EEA (commercially available from Du Pont-Mitsui Polychemicals Co., Ltd.)), Bondine (maleic anhydride-modified EEA (commercially available from Arkema)), Tuftec (maleic anhydride-modified SEBS, M1943 (commercially available from Asahi Kasei Corporation)), Kraton (maleic anhydride-modified SEBS, FG1901X (commercially available from Kraton Polymer Corporation)), Tufprene (maleic anhydride-modified SBS, 912 (commercially available from Asahi Kasei Corporation)), Septon (maleic anhydride-modified SEPS (commercially available from Kuraray Co., Ltd.)), Rexpearl (maleic anhydride-modified EEA, ET-182G, 224M, 234M (commercially available from Japan Polyolefins Corporation)), and AUROREN (maleic anhydride-modified EEA, 200S, 250S (commercially available from Nippon Paper Chemicals Co., Ltd.)).

Examples of commercial products of non-acid-modified thermoplastic elastomers (iv-b-2y) include ethylene methacrylate copolymers such as Nucrel (commercially available from Du Pont-Mitsui Polychemicals Co., Ltd.); ethylene methacrylate copolymers such as YUKARON (commercially available from Mitsubishi Chemical Corporation); $\alpha$-olefin copolymers such as Tafmer (commercially available from Mitsui Chemicals, Inc.); SEBS such as Tuftec (commercially available from Asahi Kasei Corporation); SBS such as Tufprene (commercially available from Asahi Kasei Corporation); SEPS such as Septon (commercially available from Kuraray Co., Ltd.); and EEA such as Rexpearl (commercially available from Japan Polyolefins Corporation).

Particularly preferable examples of acid-modified thermoplastic elastomers (iv-b-2x) include styrene-ethylene-butadiene-styrene copolymers modified with maleic anhydride. Examples of commercial products of acid modified-styrene-ethylene-butylene-styrene block copolymers include Tuftec M1911 (an acid value of 2 $mgCH_3ONa/g$, an MFR of 4.5 g/10 min, commercially available from Asahi Kasei Chemicals Corporation), Tuftec M1913 (an acid value of 10 $mgCH_3ONa/g$, an MFR of 5.0 g/10 min, commercially available from Asahi Kasei Chemicals Corporation), and Tuftec M1943 (an acid value of 10 $mgCH_3ONa/g$, an MFR of 8.0 g/10 min, commercially available from Asahi Kasei Chemicals Corporation).

The thermoplastic elastomer (iv-b-2) has a Charpy impact strength (measured according to JIS K 7111-1) of preferably 20 $kJ/m^2$ or more and more preferably 30 $kJ/m^2$ or more because it can increase the impact strength of the obtained r-CFRPs. The upper limit value of the Charpy impact strength of the thermoplastic elastomer (iv-b-2) is not particularly limited, and those that do not break can be preferably used.

The average MFR of the thermoplastic elastomer (iv-b-2) is preferably 1.0 g/10 min or more and more preferably 5.0 g/10 min or more. If the average MFR of the thermoplastic elastomer (iv-b-2) is within the above range, the melt viscosity during processing decreases, fiber breakage of the r-CF (A) due to processing can be minimized, and better physical properties can be exhibited.

In order to further improve both the elastic modulus and the impact strength, the amount of the thermoplastic elastomer (iv-b-2) added with respect to 100 parts by mass of the thermoplastic resin composition is preferably 5 to 20 parts by mass, more preferably 5 to 15 parts by mass, and still more preferably 5 to 10 parts by mass.

The amount of the thermoplastic elastomer (iv-b-2) added based on 100 mass% of the thermoplastic resin (B) is preferably 3 to 30 mass%, more preferably 5 to 25 mass%, and still more preferably 7 to 20 mass%. If the amount of the thermoplastic elastomer (iv-b-2) added in the thermoplastic resin (B) is within the above range, it is possible to achieve both the impact strength and the temperature of deflection under load.

When the acid-modified polypropylene (iv-b-1) and the thermoplastic elastomer (iv-b-2) are included, a total content of the acid-modified polypropylene (iv-b-1) and the thermoplastic elastomer (iv-b-2) with respect to 100 parts by mass of the polyolefin resin having a melting point of 100°C or higher is preferably 3 to 30 parts by mass, more preferably 5 to 25 parts by mass, and still more preferably 7 to 20 parts by mass because better physical properties in terms of strength, impact strength, and temperature of deflection under load can be achieved.

When the acid-modified polypropylene (iv-b-1) and the thermoplastic elastomer (b-2) are included, the amount of the acid-modified polypropylene (iv-b-1) added based on 100 mass% of the thermoplastic resin (B) is preferably 3 to 30 mass%, more preferably 5 to 25 mass%, and still more preferably 7 to 20 mass% because better physical properties in terms of strength, impact strength, and temperature of deflection under load can be achieved. In addition, in this case, the amount of the thermoplastic elastomer (iv-b-2) added is preferably 3 to 25 mass%, more preferably 5 to 20 mass%, and still more preferably 7 to 15 mass%.

4-1c. Optional components

For optional components of the present composition, description thereof will be omitted with reference to the above description of 1-lc. Optional components.

4-2. Method of producing thermoplastic resin composition

For a method of producing the present composition, description thereof will be omitted with reference to the above description of 1-2 Method of producing thermoplastic resin composition.

4-3. Molded body

For a molded body according to the fourth embodiment, description thereof will be omitted with reference to the above description of 1-3 Molded body.

[Examples]

Hereinafter, the present invention will be described in more detail with reference to examples, but the present invention is not limited to the examples. Here, items without numerical values in the tables are not contained.

<<Measurement method>>

Physical properties of raw materials, examples, reference examples and comparative examples (hereinafter referred to as examples and the like) were measured by the following methods.

1) Measurement of oxygen content of recycled carbon fiber

The oxygen content of the r-CF (A) was measured using an energy dispersive X-ray spectrometer attached to a scanning electron microscope (SEM) at an acceleration voltage of 15 kV and a field magnification of 3,000.

2) Measurement of average solubility parameter of thermoplastic resin (B), etc.

The solubility parameter of the thermoplastic resin is calculated by the Fedor's method. Specifically, it is calculated by the following Formula (1) according to the description in Polym. Eng. Sci., vol. 14, p. 147 (1974).

$$\text{Formula (1): SP value} = \sqrt{(Ev/v)} = \sqrt{(\Sigma\Delta ei/\Sigma\Delta vi)}$$

(in the formula, Ev: evaporation energy (cal/mol), v: molar volume ($cm^3$/mol), $\Delta ei$: evaporation energy of each atom or atom group, and $\Delta vi$: molar volume of each atom or atom group)

3) Measurement of diffraction intensity $I_1$ (2θ=25°) and diffraction intensity $I_2$ (2θ=44°) of r-CF (A), etc.

Using an XRD (X-ray Diometer) and Cu-Kα as a light source, the diffraction intensity of the r-CF crushed into powder at 5°<2θ<110° was measured.

4) Measurement of bulk density of r-CF (A), etc.

The bulk density of the r-CF (A) and the like was measured according to JIS K 5101.

5) Measurement of average MFR of thermoplastic resin (B), etc.

The MFR of the thermoplastic resin (B) and the like was measured according to JIS K 7210-1.

6) Measurement of Charpy impact strength of thermoplastic resin (B) and the like and molded body

The Charpy impact strength of the acid-modified thermoplastic elastomer (b-1) and the molded body was measured according to JIS K 7111-1.

7) Measurement of glass transition temperature of thermoplastic resin (B), etc.

The glass transition temperature of the thermoplastic resin (B) and the like was measured using a differential scanning calorimeter (DSC) according to JIS K 7121:2012.

8) Measurement of acid value of recycled carbon fiber

In order to measure the acid value of the r-CF (A), about 1 g of a sample was accurately weighed out in an Erlenmeyer flask with stopper, and 100 ml of a toluene/ethanol (volume ratio: toluene/ethanol=2/1) mixed solution was added and the mixture was stirred. A phenolphthalein test solution was added thereto as an indicator and left for 30 seconds. Then, it was titrated with a 0.1 N alcoholic potassium hydroxide solution until the solution turned light red. The acid value was determined by the following formula. unit: mg KOH/g.

$$\text{acid value (mg KOH/g)} = \{(5.611 \times a \times F)/S\}/(\text{non-volatile content concentration}/100)$$

where, S: amount of sample collected (g)
a: amount of 0.1 N alcoholic potassium hydroxide solution consumed (mL)
F: titer of 0.1 N alcoholic potassium hydroxide solution

9) Measurement of flow start temperature of thermoplastic resin (B), etc.

The flow start temperature was measured using a flow tester according to JIS K 7210. Specifically, using a thermal fluidity evaluation device CFT-500D (commercially available from Shimadzu Corporation), the temperature at which the melt viscosity of the thermoplastic resin was 4,800 Pa·s or less when it passed through a capillary with a die hole diameter φ of 1 mm and a die length of 1 mm under a pressure of 9.8 MPa was defined as the flow start temperature.

10) Measurement of melt viscosity of acid-modified polypropylene (iv-b-1)

The melt viscosity of the acid-modified polypropylene (iv-b-1) was measured at 220°C and a shear rate of $1.2 \times 10^3$ $sec^{-1}$ according to JIS K 7199:1999.

11) Measurement of acid value of acid-modified polypropylene (iv-b-1)

The acid value of the acid-modified polypropylene (iv-b-1) was measured according to JIS K-0070.

12) Measurement of melting point of polyolefin resin (iv-B) and acid-modified polypropylene (iv-b-1)

The melting point of the polyolefin resin (iv-B) and the acid-modified polypropylene (iv-b-1) was measured using a differential scanning calorimeter DSC6200 (commercially available from Seiko Instruments Inc.) in a temperature range of 40 to 200°C and at a heating rate of 10°C/min.

[First example]

Hereinafter, first examples corresponding to the first embodiment will be described.

<Production of r-CF>

< <Production Example 1-1>>

CFRPs derived from aircraft scrap were heated in a heated vapor atmosphere at 750°C for 4 hours. Subsequently, a heat treatment was performed in air at 550°C for 6 hours to obtain a recycled carbon fiber mass. The obtained recycled carbon fiber mass was crushed with a cutting machine and 4-15 mm fibers were then collected to obtain a recycled carbon fiber r-CF-A according to Production Example 1.

<<Production Example 1-2>>

A recycled carbon fiber r-CF-B according to Production Example 2 was obtained in the same method as in Production Example 1 except that the CFRPs derived from automobile parts waste materials were used in place of the CFRPs derived from aircraft scrap.

<<Production Example 1-3>>

A recycled carbon fiber r-CF-C according to Production Example 3 was obtained using the same materials and production method as in Production Example 1 except that a process of crushing with a cutting machine was not performed and a process of crushing with a crusher was performed.

<<Raw materials>>

Raw materials used in examples and the like are shown below.

<r-CF (A), etc.>

·A-I: r-CF-A (an oxygen content of 6 mass%, $I_1/I_2$=5.8, and a bulk density of 0.25 g/cm$^3$)
·A-II: r-CF-B (an oxygen content of 6 mass%, $I_1/I_2$=5.0, and a bulk density of 0.10 g/cm$^3$)
·A-III: r-CF-C (an oxygen content of 6 mass%, $I_1/I_2$=5.9, and a bulk density of 0.03 g/cm$^3$)
·A'-IV: v-CF-A (commercially available from Mitsui Chemicals Inc, an oxygen content of 0 mass%, $I_1/I_2$=6.9, and a bulk density of 0.53 g/cm$^3$)

<Thermoplastic resin (B), etc.>

·i-B-I: PA-6, Amilan CM1041-LO (commercially available from Toray Industries, Inc., a solubility parameter of 11.6)
·i-B-II: PA-66, Amilan CM3001N (commercially available from Toray Industries, Inc., a solubility parameter of 13.6)
·B'-I: PP, PMA60Z (PP resin, commercially available from SunAllomer Ltd., a solubility parameter of 9.3, glass transition temperature: 0°C, an MFR of 45 g/10 min)

[Acid-modified thermoplastic elastomer (b-1), etc.]

·b-1-I: acid-modified SEBS, Tuftec M1943 (commercially available from Asahi Kasei Chemicals Corporation, an acid value of 10 mgCH$_3$ONa/g, glass transition temperature: - 40°C, an MFR of 8.0 g/10 min)
·b'-1-II: SEBS, Tuftec H1221 (commercially available from Asahi Kasei Chemicals Corporation, an MFR of 5 g/10 min, glass transition temperature: -42°C, no acid modification)

<Production of thermoplastic resin composition>

(Example 1-1)

10 parts by mass of A-1 as the r-CF (A) and 90 parts by mass of i-B-I as the thermoplastic resin (B) were used and extruded with a twin-screw extruder (commercially available from The Japan Steel Works, Ltd.) at 280°C and granulated to obtain a thermoplastic resin composition (refer to Table 1). Table 2 shows physical property values of the r-CF (A) and the thermoplastic resin (B).

(Examples 1-2 to 1-13, Reference Example 1-1, and Comparative Example 1-1)

Thermoplastic resin compositions were obtained in the same method as in Example 1-1 except that materials and amounts added (parts by mass) were changed as shown in Table 1. Table 2 shows physical property values of the r-CF (A) and the thermoplastic resin (B) of examples and the like.

[Table 1]

| Raw materials | | Recycled carbon fiber (A), etc. | | | | Thermoplastic resin (B) | | | Acid-modified thermoplastic elastomer (b-1) | |
|---|---|---|---|---|---|---|---|---|---|---|
| | | A-I | A-II | A-III | A'-IV | i-B-I | i-B-II | B'-I | b-1-I | b'-1-II |
| Example | 1-1 | 10 | | | | 90 | | | | |
| | 1-2 | 20 | | | | 80 | | | | |
| | 1-3 | 30 | | | | 70 | | | | |
| | 1-4 | 40 | | | | 60 | | | | |
| | 1-5 | 50 | | | | 50 | | | | |
| | 1-6 | 30 | | | | | 70 | | | |
| | 1-7 | | 30 | | | 70 | | | | |
| | 1-8 | | | 30 | | 70 | | | | |
| | 1-9 | 30 | | | | 65 | | | 5 | |
| | 1-10 | 30 | | | | 60 | | | 10 | |
| | 1-11 | 30 | | | | 50 | | | 20 | |
| | 1-12 | 30 | | | | 40 | | | 30 | |
| | 1-13 | 30 | | | | 50 | | | | 20 |
| Reference Example | 1-1 | | | | 30 | 70 | | | | |
| Comparative Example | 1-1 | 30 | | | | | | 70 | | |

[Table 2]

| | | r-CF(A) | | | | Thermoplastic resin (B) | | |
|---|---|---|---|---|---|---|---|---|
| | | Oxygen content (mass%) | $I_2$ | $I_1/I_2$ | Bulk density (g/cm$^3$) | Average solubility parameter | Average MFR | Charpy impact strength (kJ/m$^2$) |
| Example | 1-1 | 6 | 700 | 5.8 | 0.25 | 11.6 | 21 (230°-2.16 kg) | 5 |
| | 1-2 | 6 | 700 | 5.8 | 0.25 | 11.6 | 21 (230°-2.16 kg) | 5 |
| | 1-3 | 6 | 700 | 5.8 | 0.25 | 11.6 | 21 (230°-2.16 kg) | 5 |
| | 1-4 | 6 | 700 | 5.8 | 0.25 | 11.6 | 21 (230°-2.16 kg) | 5 |
| | 1-5 | 6 | 700 | 5.8 | 0.25 | 11.6 | 21 (230°-2.16 kg) | 5 |
| | 1-6 | 6 | 700 | 5.8 | 0.25 | 13.6 | 110 (280°-2.16 kg) | 5 |
| | 1-7 | 6 | 690 | 5.0 | 0.1 | 11.6 | 21 (230°-2.16 kg) | 5 |
| | 1-8 | 6 | 850 | 5.9 | 0.03 | 11.6 | 21 (230°-2.16 kg) | 5 |
| | 1-9 | 6 | 700 | 5.8 | 0.25 | 11.5 | 20 (230°-2.16 kg) | 7 |
| | 1-10 | 6 | 700 | 5.8 | 0.25 | 11.4 | 19 (230°-2.16 kg) | 10 |
| | 1-11 | 6 | 700 | 5.8 | 0.25 | 11.2 | 17 (230°-2.16 kg) | 15 |
| | 1-12 | 6 | 700 | 5.8 | 0.25 | 11.0 | 15 (230°-2.16 kg) | 20 |
| | 1-13 | 6 | 700 | 5.8 | 0.25 | 11.1 | 16 (230°-2.16 kg) | 6 |
| Reference Example | 1-1 | 0 | 940 | 6.9 | 0.53 | 11.6 | 21 (230°-2.16 kg) | 5 |
| Comparative Example | 1-1 | 6 | 700 | 5.8 | 0.25 | 9.3 | 45 (230°-2.16 kg) | 5 |

<Evaluation of thermoplastic resin composition>

The thermoplastic resin compositions according to examples and the like were subjected to the following evaluations. The results are shown in Table 3.

α) Evaluation of productivity (deposits at tip of die)

The amounts of deposits generated on the die at the tip of the extruder when 2 kg of the thermoplastic resin compositions of examples and the like was produced at a discharge rate of 20 kg/h were evaluated based on the following criteria.

+++: the weight of deposits was less than 1 g. very good productivity.

++: the weight of deposits was 1 g or more and less than 3 g. good productivity.
+: the weight of deposits was 3 g or more and less than 5 g. productive and practical.
NG: the weight of deposits was 5 g or more. poor productivity.

β) Evaluation of productivity (accumulation of fibers)

Similarly, regarding feedability of fibers when thermoplastic resin compositions of examples and the like were extruded, the degree of fiber accumulation at the raw material supply port when fibers were supplied using a gravimetric feeder with a hopper capacity of 25 L at a discharge rate of 6 kg/h was visually evaluated.

+++: accumulation did not occur. very good productivity.
++: slight accumulation occurred, good productivity.
+: accumulation occurred to the extent that it did not affect extrusion processing. Productive.
NG: fibers were not supplied to the extruder due to accumulation. poor productivity.

<Production of molded body>

The thermoplastic resin composition of examples and the like was molded using an injection molding machine (commercially available from Toshiba Machine Co., Ltd.) to obtain a multi-purpose test piece with a length of 80 mm×a width of 10 mm×a thickness of 4 mm.

<Evaluation of molded body>

The molded bodies according to examples and the like were subjected to the following evaluation. The results are shown in Table 3.

γ) Evaluation of elastic modulus

Using the obtained multi-purpose test piece of examples and the like, the bending elastic modulus was measured according to JIS K 7171:2016. A higher measured value indicates better strength. The evaluation criteria for the elastic modulus are as follows.

+++: 10,000 MPa or more. excellent.
++: 8,000 MPa or more and less than 10,000 MPa. good.
+: 5,000 MPa or more and less than 8,000 MPa. practical range.
NG: less than 5,000 MPa. poor.

δ) Evaluation of Charpy impact strength

Using the obtained multi-purpose test piece of examples and the like, the notched Charpy impact strength was measured according to JIS K 7111-1:2012. Evaluation criteria are as follows.

+++: 15 kJ/m$^2$ or more. excellent.
++7 kJ/m$^2$ or more and less than 15 kJ/m$^2$. good.
+: 5 kJ/m$^2$ or more and less than 7 kJ/m$^2$. practical range.
NG: less than 5 kJ/m$^2$.

For applications such as automobile parts for which high strength was required, the Charpy impact strength was preferably 7 kJ/m$^2$ or more.

[Table 3]

| | | | Productivity | | Physical properties | |
|---|---|---|---|---|---|---|
| | | | Deposits at tip of die | Accumulation of fibers | Elastic modulus | Charpy impact strength |
| Example | | 1-1 | +++ | +++ | +++ | ++ |
| | | 1-2 | +++ | +++ | +++ | ++ |
| | | 1-3 | +++ | +++ | +++ | ++ |
| | | 1-4 | ++ | +++ | +++ | ++ |
| | | 1-5 | + | ++ | +++ | ++ |
| | | 1-6 | +++ | +++ | +++ | ++ |
| | | 1-7 | +++ | ++ | +++ | ++ |
| | | 1-8 | +++ | + | +++ | ++ |
| | | 1-9 | +++ | +++ | +++ | +++ |
| | | 1-10 | +++ | +++ | +++ | +++ |
| | | 1-11 | +++ | +++ | +++ | +++ |
| | | 1-12 | +++ | +++ | ++ | +++ |
| | | 1-13 | +++ | +++ | +++ | ++ |
| Reference Example | | 1-1 | +++ | +++ | +++ | ++ |
| Comparative Example | | 1-1 | + | +++ | ++ | + |

As shown in examples in Table 3, it was confirmed that a molded body formed from a thermoplastic resin composition containing an r-CF (A) having an oxygen content of 5.0 mass% or more and a thermoplastic resin (B) having a solubility parameter of 10 to 15 in combination had excellent productivity, and excellent elastic modulus and impact strength.

[Second example]

Hereinafter, examples corresponding to the second embodiment will be described.

<Production of r-CF>

<<Production Example 2-1>> to <<Production Example 2-3>>

Production Examples 1-1 to 1-3 will be referred to in order.

<<Raw materials>>

Raw materials used in examples and the like are shown below.

<r-CF (A), etc.>

· For A-1, A-II, A-III, and A'-IV, description thereof will be omitted with reference to the description of first examples.

<Thermoplastic resin (B), etc.>

·ii-B1-I: ACRYPET TF-9 (PMMA resin, commercially available from Mitsui Chemicals Inc, solubility parameter: 9.2, glass transition temperature: 90°C, an MFR of 20 g/10 min)

·ii-B1-II: ACRYPET VH-3F (PMMA resin, commercially available from Mitsui Chemicals Inc, solubility parameter: 9.5, glass transition temperature: 90°C, an MFR of 1.8 g/10 min)

·ii-B2a-I: Cevian T-500SF (ABS resin, commercially available from Daicel Miraizu Ltd., solubility parameter: 9.6, glass transition temperature: 80°C, an MFR of 25 g/10 min)

·ii-B2a-II: Cevian 466MD (ABS resin, commercially available from Daicel Miraizu Ltd., solubility parameter: 9.9, glass transition temperature: 95°C, an MFR of 4.0 g/10 min)

·ii-B2b-I: Cevian 090SF (AS resin, commercially available from Daicel Miraizu Ltd., solubility parameter: 10.0, glass transition temperature: 100°C, an MFR of 23 g/10 min)

·ii-B2b-II: Sanrex SAN-H (AS resin, commercially available from Techno-UMG Co., Ltd., solubility parameter: 10.7, glass transition temperature: 105°C, an MFR of 5.0 g/10 min)

·B'-I: description thereof will be omitted with reference to the description of first examples.

[Acid-modified thermoplastic elastomer (b-1), etc.]

For b-1-I and b'-1-II, description thereof will be omitted with reference to the description of first examples.

<Production of thermoplastic resin composition>

(Example 2-1)

10 parts by mass of A-I as the r-CF (A) and 90 parts by mass of ii-B1-I as the thermoplastic resin (B) were used and extruded with a twin-screw extruder (commercially available from The Japan Steel Works, Ltd.) at 280°C and granulated to obtain a thermoplastic resin composition (refer to Table 4). Table 7 shows physical property values of the r-CF (A) and the thermoplastic resin (B).

(Examples 2-2 to 2-36, Reference Examples 2-1 to 2-3, and Comparative Example 2-1)

Thermoplastic resin compositions were obtained in the same method as in Example 2-1 except that materials and amounts added (parts by mass) were changed as shown in Tables 4 to 6. Tables 7 to 9 show physical property values of the r-CF (A) and the thermoplastic resin (B) of examples and the like.

[Table 4]

| Raw materials | | Recycled carbon fiber (A), etc. | | | | Thermoplastic resin (B), etc. | | | Acid-modified thermoplastic elastomer (b-1) | |
| --- | --- | --- | --- | --- | --- | --- | --- | --- | --- | --- |
| | | A-I | A-II | A-III | A'-IV | ii-BI-I | ii-BI-II | B'-I | b-1-I | b'-1-II |
| Example | 2-1 | 20 | | | | 80 | | | | |
| | 2-2 | | 20 | | | 80 | | | | |
| | 2-3 | | | 20 | | 80 | | | | |
| | 2-4 | 10 | | | | 90 | | | | |
| | 2-5 | 30 | | | | 70 | | | | |
| | 2-6 | 40 | | | | 60 | | | | |
| | 2-7 | 20 | | | | 75 | | | 5 | |
| | 2-8 | 20 | | | | 70 | | | 10 | |
| | 2-9 | 20 | | | | 60 | | | 20 | |
| | 2-10 | 20 | | | | 50 | | | 30 | |
| | 2-11 | 20 | | | | 70 | | | | 10 |
| | 2-12 | 20 | | | | | 80 | | | |

(continued)

| Raw materials | | Recycled carbon fiber (A), etc. | | | | Thermoplastic resin (B), etc. | | | Acid-modified thermoplastic elastomer (b-1) | |
|---|---|---|---|---|---|---|---|---|---|---|
| | | A-I | A-II | A-III | A'-IV | ii-BI-I | ii-BI-II | B'-I | b-1-I | b'-1-II |
| Reference Example | 2-1 | | | | 20 | 80 | | | | |
| Comparative Example | 2-1 | 20 | | | | | | 80 | | |

[Table 5]

| Raw materials | | Recycled carbon fiber (A), etc. | | | | Thermoplastic resin (B), etc. | | | Acid-modified thermoplastic elastomer (b-1) | |
|---|---|---|---|---|---|---|---|---|---|---|
| | | A-I | A-II | A-III | A'-IV | ii-B2a-I | ii-B2a-II | B'-I | b-1-I | b'-1-II |
| Example | 2-13 | 20 | | | | 80 | | | | |
| | 2-14 | | 20 | | | 80 | | | | |
| | 2-15 | | | 20 | | 80 | | | | |
| | 2-16 | 10 | | | | 90 | | | | |
| | 2-17 | 30 | | | | 70 | | | | |
| | 2-18 | 40 | | | | 60 | | | | |
| | 2-19 | 20 | | | | 75 | | | 5 | |
| | 2-20 | 20 | | | | 70 | | | 10 | |
| | 2-21 | 20 | | | | 60 | | | 20 | |
| | 2-22 | 20 | | | | 50 | | | 30 | |
| | 2-23 | 20 | | | | 70 | | | | 10 |
| | 2-24 | 20 | | | | | 80 | | | |
| Reference Example | 2-2 | | | | 20 | 80 | | | | |
| Comparative Example | 2-1 | 20 | | | | | | 80 | | |

[Table 6]

| Raw materials | | Recycled carbon fiber (A), etc. | | | | Thermoplastic resin (B), etc. | | | Acid-modified thermoplastic elastomer (b-1) | |
|---|---|---|---|---|---|---|---|---|---|---|
| | | A-I | A-II | A-III | A'-IV | ii-B2b-I | ii-B2b-II | B'-I | b-1-I | b'-1-II |
| Example | 2-25 | 20 | | | | 80 | | | | |
| | 2-26 | | 20 | | | 80 | | | | |
| | 2-27 | | | 20 | | 80 | | | | |
| | 2-28 | 10 | | | | 90 | | | | |
| | 2-29 | 30 | | | | 70 | | | | |
| | 2-30 | 40 | | | | 60 | | | | |
| | 2-31 | 20 | | | | 75 | | | 5 | |
| | 2-32 | 20 | | | | 70 | | | 10 | |
| | 2-33 | 20 | | | | 60 | | | 20 | |
| | 2-34 | 20 | | | | 50 | | | 30 | |
| | 2-35 | 20 | | | | 60 | | | | 10 |
| | 2-36 | 20 | | | | | 80 | | | |
| Reference Example | 2-3 | | | | 20 | 80 | | | | |
| Comparative Example | 2-1 | 20 | | | | | | 80 | | |

[Table 7]

| | | r-CF(A) | | | | Thermoplastic resin (B) | | |
|---|---|---|---|---|---|---|---|---|
| | | Oxygen content (mass%) | $I_2$ | $I_1/I_2$ | Bulk density (g/cm$^3$) | Average solubility parameter | Average MFR | Charpy impact strength |
| Example | 2-1 | 6 | 700 | 5.8 | 0.25 | 9.2 | 20 (230 °C-3.8 kg) | 1 |
| | 2-2 | 6 | 690 | 5 | 0.1 | 9.2 | 20 (230 °C-3.8 kg) | 1 |
| | 2-3 | 6 | 850 | 5.9 | 0.03 | 9.2 | 20 (230 °C-3.8 kg) | 1 |
| | 2-4 | 6 | 700 | 5.8 | 0.25 | 9.2 | 20 (230 °C-3.8 kg) | 1 |
| | 2-5 | 6 | 700 | 5.8 | 0.25 | 9.2 | 20 (230 °C-3.8 kg) | 1 |
| | 2-6 | 6 | 700 | 5.8 | 0.25 | 9.2 | 20 (230 °C-3.8 kg) | 1 |
| | 2-7 | 6 | 700 | 5.8 | 0.25 | 9.3 | 22 (230 °C-3.8 kg) | 4 |
| | 2-8 | 6 | 700 | 5.8 | 0.25 | 9.3 | 24 (230 °C-3.8 kg) | 7 |
| | 2-9 | 6 | 700 | 5.8 | 0.25 | 9.5 | 27 (230 °C-3.8 kg) | 10 |
| | 2-10 | 6 | 700 | 5.8 | 0.25 | 9.6 | 33 (230 °C-3.8 kg) | 16 |
| | 2-11 | 6 | 700 | 5.8 | 0.25 | 9.3 | 24 (230 °C-3.8 kg) | 1 |
| | 2-12 | 6 | 700 | 5.8 | 0.25 | 9.5 | 1.8 (230 °C-3.8 kg) | 1 |
| Reference Example | 2-1 | 0 | 940 | 6.9 | 0.53 | 9.2 | 20 (230 °C-3.8 kg) | 1 |
| Comparative Example | 2-1 | 6 | 700 | 5.8 | 0.25 | 9.3 | 45 (230°C-2.16 kg) | 5 |

**EP 4 349 919 A1**

[Table 8]

| | | r-CF(A) | | | | Thermoplastic resin (B) | | |
|---|---|---|---|---|---|---|---|---|
| | | Oxygen content (mass%) | $I_2$ | $I_1/I_2$ | Bulk density (g/cm$^3$) | Average solubility parameter | Average MFR | Charpy impact strength |
| Example | 2-13 | 6 | 700 | 5.8 | 0.25 | 10 | 25 (220°C-10 kg) | 14 |
| | 2-14 | 6 | 690 | 5 | 0.1 | 10 | 25 (220°C-10 kg) | 14 |
| | 2-15 | 6 | 850 | 5.9 | 0.03 | 10 | 25 (220°C-10 kg) | 14 |
| | 2-16 | 6 | 700 | 5.8 | 0.25 | 10 | 25 (220°C-10 kg) | 14 |
| | 2-17 | 6 | 700 | 5.8 | 0.25 | 10 | 25 (220°C-10 kg) | 14 |
| | 2-18 | 6 | 700 | 5.8 | 0.25 | 10 | 25 (220°C-10 kg) | 14 |
| | 2-19 | 6 | 700 | 5.8 | 0.25 | 10 | 27 (220°C-10 kg) | 12 |
| | 2-20 | 6 | 700 | 5.8 | 0.25 | 10 | 30 (220°C-10 kg) | 14 |
| | 2-21 | 6 | 700 | 5.8 | 0.25 | 10.1 | 35 (220°C-10 kg) | 20 |
| | 2-22 | 6 | 700 | 5.8 | 0.25 | 10.1 | 40 (220°C-10 kg) | 24 |
| | 2-23 | 6 | 700 | 5.8 | 0.25 | 10 | 28 (220°C-10 kg) | 14 |
| | 2-24 | 6 | 700 | 5.8 | 0.25 | 10.7 | 5.0 (220°C-10 kg) | 10 |
| Reference Example | 2-2 | 0 | 940 | 6.9 | 0.53 | 10 | 25 (220°C-10 kg) | 14 |
| Comparative Example | 2-1 | 6 | 700 | 5.8 | 0.25 | 9.3 | 45 (230°C-2.16 kg) | 5 |

28

[Table 9]

| | | r-CF(A) | | | | Thermoplastic resin (B) | | |
|---|---|---|---|---|---|---|---|---|
| | | Oxygen content (mass%) | $I_2$ | $I_1/I_2$ | Bulk density (g/cm$^3$) | Average solubility parameter | Average MFR | Charpy impact strength |
| Example | 2-25 | 6 | 700 | 5.8 | 0.25 | 10 | 23 (220°C-10 kgf) | 2 |
| | 2-26 | 6 | 690 | 5 | 0.1 | 10 | 23 (220°C-10 kgf) | 2 |
| | 2-27 | 6 | 850 | 5.9 | 0.03 | 10 | 23 (220°C-10 kgf) | 2 |
| | 2-28 | 6 | 700 | 5.8 | 0.25 | 10 | 23 (220°C-10 kgf) | 2 |
| | 2-29 | 6 | 700 | 5.8 | 0.25 | 10 | 23 (220°C-10 kgf) | 2 |
| | 2-30 | 6 | 700 | 5.8 | 0.25 | 10 | 23 (220°C-10 kgf) | 2 |
| | 2-31 | 6 | 700 | 5.8 | 0.25 | 10 | 25 (220°C-10 kgf) | 3 |
| | 2-32 | 6 | 700 | 5.8 | 0.25 | 10 | 28 (220°C-10 kgf) | 5 |
| | 2-33 | 6 | 700 | 5.8 | 0.25 | 10.1 | 33 (220°C-10 kgf) | 10 |
| | 2-34 | 6 | 700 | 5.8 | 0.25 | 10.1 | 38 (220°C-10 kgf) | 13 |
| | 2-35 | 6 | 700 | 5.8 | 0.25 | 10.1 | 26 (220°C-10 kgf) | 2 |
| | 2-36 | 6 | 700 | 5.8 | 0.25 | 10.7 | 5 (220°C-10 kgf) | 1 |
| Reference Example | 2-3 | 0 | 940 | 6.9 | 0.53 | 10 | 23 (220°C-10 kgf) | 2 |
| Comparative Example | 2-1 | 6 | 700 | 5.8 | 0.25 | 9.3 | 45 (230°C-2.16 kg) | 5 |

<Evaluation of thermoplastic resin composition>

For the evaluation method, the description of the first examples will be referred to. The results are shown in Tables 10 to 12.

[Table 10]

| Raw materials | | Productivity | | Physical properties | |
|---|---|---|---|---|---|
| | | Deposits at tip of die | Accumulation of fibers | Elastic modulus | Charpy impact strength |
| Example | 2-1 | +++ | +++ | +++ | + |
| | 2-2 | +++ | ++ | +++ | + |
| | 2-3 | +++ | + | +++ | + |
| | 2-4 | +++ | +++ | ++ | + |
| | 2-5 | +++ | +++ | +++ | + |
| | 2-6 | ++ | +++ | +++ | + |
| | 2-7 | +++ | +++ | +++ | ++ |
| | 2-8 | +++ | +++ | +++ | +++ |
| | 2-9 | +++ | +++ | ++ | +++ |
| | 2-10 | +++ | +++ | ++ | +++ |
| | 2-11 | +++ | +++ | +++ | + |
| | 2-12 | +++ | +++ | ++ | + |
| Reference Example | 2-1 | +++ | +++ | +++ | + |
| Comparative Example | 2-1 | + | +++ | ++ | + |

[Table 11]

| Raw materials | | Productivity | | Physical properties | |
|---|---|---|---|---|---|
| | | Deposits at tip of die | Accumulation of fibers | Elastic modulus | Charpy impact strength |
| Example | 2-13 | +++ | +++ | +++ | ++ |
| | 2-14 | +++ | ++ | +++ | ++ |
| | 2-15 | +++ | + | +++ | ++ |
| | 2-16 | +++ | +++ | ++ | ++ |
| | 2-17 | +++ | +++ | +++ | ++ |
| | 2-18 | ++ | +++ | +++ | ++ |
| | 2-19 | +++ | +++ | +++ | ++ |
| | 2-20 | +++ | +++ | +++ | +++ |
| | 2-21 | +++ | +++ | ++ | +++ |
| | 2-22 | +++ | +++ | ++ | +++ |
| | 2-23 | +++ | +++ | +++ | ++ |
| | 2-24 | +++ | +++ | ++ | ++ |
| Reference Example | 2-2 | +++ | +++ | +++ | ++ |
| Comparative Example | 2-1 | + | +++ | ++ | + |

[Table 12]

| Raw materials | | | Productivity | | Physical properties | |
|---|---|---|---|---|---|---|
| | | | Deposits at tip of die | Accumulation of fibers | Elastic modulus | Charpy impact strength |
| Example | | 2-25 | +++ | +++ | +++ | + |
| | | 2-26 | +++ | ++ | +++ | + |
| | | 2-27 | +++ | + | +++ | + |
| | | 2-28 | +++ | +++ | ++ | + |
| | | 2-29 | +++ | +++ | +++ | + |
| | | 2-30 | ++ | +++ | +++ | + |
| | | 2-31 | +++ | +++ | +++ | ++ |
| | | 2-32 | +++ | +++ | +++ | +++ |
| | | 2-33 | +++ | +++ | ++ | +++ |
| | | 2-34 | +++ | +++ | ++ | +++ |
| | | 2-35 | +++ | +++ | +++ | + |
| | | 2-36 | +++ | +++ | ++ | + |
| Reference Example | | 2-3 | +++ | +++ | +++ | + |
| Comparative Example | | 2-1 | + | +++ | ++ | + |

As shown in examples in Tables 10 to 12, it was confirmed that a molded body formed from a thermoplastic resin composition containing an r-CF (A) having an oxygen content of 5.0 mass% or more and a thermoplastic resin (B) having a solubility parameter of 9 to 15 in combination had excellent productivity and excellent elastic modulus and impact strength.

[Third example]

Hereinafter, third examples corresponding to the third embodiment will be described.

<Production of r-CF>

<<Production Example 3-1>> to <<Production Example 3-3>>

Production Examples 1-1 to 1-3 will be referred to in order.

<< Production Example 3-4>>

CFRPs derived from aircraft scrap were heated at 450°C, a resin component was fired and removed, and subsequently a 3 V DC electrolytic reaction was performed in a sodium hydroxide aqueous solution using a carbon fiber aggregate as a positive electrode and a titanium electrode as a negative electrode, and the obtained recycled carbon fiber mass was crushed with a crusher and classified to obtain an r-CF-D.

«Raw materials»

Raw materials used in examples and the like are shown below.

<r-CF (A), etc.>

·A-V: r-CF-E (an oxygen content of 6 mass%, an acid value of 0.060 mmol/g, $I_1/I_2$=5.8, and a bulk density of 0.25 g/cm$^3$)

·A-VI: r-CF-F (an oxygen content of 6 mass%, an acid value of 0.004 mmol/g, $I_1/I_2$=5.0, and a bulk density of 0.10 g/cm$^3$)

·A-VII: r-CF-G (an oxygen content of 6 mass%, an acid value of 0.060 mmol/g, $I_1/I_2$=5.9, and a bulk density of 0.03 g/cm$^3$)

·A-VIII: r-CF-H (an oxygen content of 8 mass%, an acid value of 0.120 mmol/g, $I_1/I_2$=4.9, and a bulk density of 0.23 g/cm$^3$)

·A'-II: v-CF-B (commercially available from Mitsui Chemicals Inc, an oxygen content of 0 mass%, an acid value of 0.001 mmol/g, $I_1/I_2$=6.9, and a bulk density of 0.53 g/cm$^3$) <Thermoplastic resin (B), etc.>

·iii-B1-I: Toraycon 1401 ×06 (commercially available from Toray Industries, Inc., PBT (polyester resin), flow start temperature: 224°C)

·iii-B1-II: Tritan GN071 (commercially available from Eastman Chemical Company, PET-G (polyester resin), flow start temperature: 235°C)

·iii-B2-I: Iupilon E-2000 (commercially available from Mitsubishi Engineering-Plastics Corporation, PC (polycarbonate resin), flow start temperature: 230°C)

·iii-B2-II: Novalloy S 1500 (commercially available from Daicel Polymer Ltd., PC (polycarbonate resin), flow start temperature: 220°C)

·iii-B1-III: Mitsui Pet SA135 (commercially available from Mitsui Chemicals, Inc., PET (polyester resin), flow start temperature: 253°C)

·B'-II: SunAllomer PMA-60Z (commercially available from SunAllomer Ltd., PP (polypropylene resin), flow start temperature: 140°C)

[Acid-modified thermoplastic elastomer (b-1), etc.]

For b-1-I, the description of first examples will be referred to.

<Production of thermoplastic resin composition>

(Example 3-1)

10 parts by mass of A-V as the r-CF (A) and 90 parts by mass of iii-B 1-1 as the thermoplastic resin (B) were used and extruded with a twin-screw extruder (commercially available from The Japan Steel Works, Ltd.) at 280°C and granulated to obtain a thermoplastic resin composition (refer to Table 13). Table 14 shows physical property values of the r-CF (A) and the thermoplastic resin (B).

(Examples 3-2 to 3-20, Reference Example 3-1, and Comparative Examples 3-1 to 3-4)

Thermoplastic resin compositions were obtained in the same method as in Example 3-1 except that materials and amounts added (parts by mass) were changed as shown in Table 13. Table 14 shows physical property values of the r-CF (A) and the thermoplastic resin (B) of examples and the like.

[Table 13]

| Raw materials | | Recycled carbon fiber (A), etc. | | | | | Thermoplastic resin (B) | | | | | | Acid-modified thermoplastic elastomer (b-1) |
|---|---|---|---|---|---|---|---|---|---|---|---|---|---|
| | | A-V | A-VI | A-VII | VIII | A'-II | iii-B1-I | iii-B1-II | iii-B2-I | iii-B2-II | iii-B1-III | B'-II | b-1-I |
| Example | 3-1 | 10 | | | | | 90 | | | | | | |
| | 3-2 | 20 | | | | | | 80 | | | | | |
| | 3-3 | 30 | | | | | 70 | | | | | | |
| | 3-4 | 40 | | | | | | 60 | | | | | |
| | 3-5 | 50 | | | | | 50 | | | | | | |
| | 3-6 | 30 | | | | | | 70 | | | | | |
| | 3-7 | | 30 | | | | 70 | | | | | | |
| | 3-8 | | | 30 | | | 70 | | | | | | |
| | 3-9 | 30 | | | | | 65 | | | | | | 5 |
| | 3-10 | 30 | | | | | 60 | | | | | | 10 |
| | 3-11 | 10 | | | | | | | 90 | | | | |
| | 3-12 | 20 | | | | | | | | 80 | | | |
| | 3-13 | 30 | | | | | | | 70 | | | | |
| | 3-14 | 40 | | | | | | | | 60 | | | |
| | 3-15 | 50 | | | | | | | 50 | | | | |
| | 3-16 | 30 | | | | | | | | 70 | | | |
| | 3-17 | | 30 | | | | | | 70 | | | | |
| | 3-18 | | | 30 | | | | | | 70 | | | |
| | 3-19 | 30 | | | | | | | 65 | | | | 5 |
| | 3-20 | 30 | | | | | | | 60 | | | | 10 |
| Reference Example | 3-1 | | | | | 30 | 70 | | | | | | |
| Comparative Example | 3-1 | | | | 30 | | | 70 | | | | | |
| | 3-2 | | | | 30 | | | | | 70 | | | |
| | 3-3 | 30 | | | | | | | | | 70 | | |
| | 3-4 | 30 | | | | | | | | | | 70 | |

[Table 14]

| | | r-CF(A) | | | | | Thermoplastic resin (B) | |
|---|---|---|---|---|---|---|---|---|
| | | Oxygen content (mass%) | Acid value (mmol/g) | $I_2$ | $I_1/I_2$ | Bulk density (g/cm$^3$) | Average flow start temperature (°C) | Charpy impact strength |
| Example | 3-1 | 6 | 0.060 | 700 | 5.8 | 0.25 | 224 | 5 |
| | 3-2 | 6 | 0.060 | 700 | 5.8 | 0.25 | 235 | 5 |
| | 3-3 | 6 | 0.060 | 700 | 5.8 | 0.25 | 224 | 5 |
| | 3-4 | 6 | 0.060 | 700 | 5.8 | 0.25 | 235 | 5 |
| | 3-5 | 6 | 0.060 | 700 | 5.8 | 0.25 | 224 | 5 |
| | 3-6 | 6 | 0.060 | 700 | 5.8 | 0.25 | 235 | 5 |
| | 3-7 | 6 | 0.004 | 690 | 5 | 0.1 | 224 | 5 |
| | 3-8 | 6 | 0.060 | 850 | 5.9 | 0.03 | 235 | 5 |
| | 3-9 | 6 | 0.060 | 700 | 5.8 | 0.25 | 224 | 40 |
| | 3-10 | 6 | 0.060 | 700 | 5.8 | 0.25 | 235 | 65 |
| | 3-11 | 6 | 0.060 | 700 | 5.8 | 0.25 | 230 | 88 |
| | 3-12 | 6 | 0.060 | 700 | 5.8 | 0.25 | 220 | 60 |
| | 3-13 | 6 | 0.060 | 700 | 5.8 | 0.25 | 230 | 88 |
| | 3-14 | 6 | 0.060 | 700 | 5.8 | 0.25 | 220 | 60 |
| | 3-15 | 6 | 0.060 | 700 | 5.8 | 0.25 | 230 | 88 |
| | 3-16 | 6 | 0.060 | 700 | 5.8 | 0.25 | 220 | 60 |
| | 3-17 | 6 | 0.004 | 690 | 5 | 0.1 | 230 | 88 |
| | 3-18 | 6 | 0.060 | 850 | 5.9 | 0.03 | 220 | 60 |
| | 3-19 | 6 | 0.060 | 700 | 5.8 | 0.25 | 230 | 100< |
| | 3-20 | 6 | 0.060 | 700 | 5.8 | 0.25 | 220 | 100< |
| Reference Example | 3-1 | 0 | 0.001 | 940 | 6.9 | 0.53 | 224 | 5 |
| Comparative Example | 3-1 | 8 | 0.120 | 620 | 4.9 | 0.23 | 235 | 5 |
| | 3-2 | 8 | 0.120 | 620 | 4.9 | 0.23 | 220 | 60 |
| | 3-3 | 6 | 0.060 | 700 | 5.8 | 0.25 | 253 | 7 |
| | 3-4 | 6 | 0.060 | 700 | 5.8 | 0.25 | 140 | 5 |

<Evaluation of thermoplastic resin composition>

For the evaluation method, the description of examples corresponding to the first embodiment will be referred to. The results are shown in Table 15.

[Table 15]

| Raw materials | | | Productivity | | Molded body | |
|---|---|---|---|---|---|---|
| | | | Deposits at tip of die | Accumulation of fibers | Elastic modulus | Charpy impact strength |
| Example | | 3-1 | +++ | +++ | +++ | ++ |
| | | 3-2 | +++ | +++ | +++ | ++ |
| | | 3-3 | +++ | +++ | +++ | ++ |
| | | 3-4 | ++ | +++ | +++ | ++ |
| | | 3-5 | + | ++ | +++ | ++ |
| | | 3-6 | +++ | +++ | +++ | ++ |
| | | 3-7 | +++ | ++ | +++ | ++ |
| | | 3-8 | +++ | + | +++ | ++ |
| | | 3-9 | +++ | +++ | +++ | +++ |
| | | 3-10 | +++ | +++ | +++ | +++ |
| | | 3-11 | +++ | +++ | +++ | ++ |
| | | 3-12 | +++ | +++ | +++ | ++ |
| | | 3-13 | +++ | +++ | +++ | ++ |
| | | 3-14 | ++ | +++ | +++ | ++ |
| | | 3-15 | + | ++ | ++ | ++ |
| | | 3-16 | +++ | +++ | +++ | ++ |
| | | 3-17 | +++ | ++ | ++ | ++ |
| | | 3-18 | +++ | + | +++ | ++ |
| | | 3-19 | +++ | +++ | +++ | +++ |
| | | 3-20 | +++ | +++ | +++ | +++ |
| Reference Example | | 3-1 | +++ | +++ | +++ | ++ |
| Comparative Example | | 3-1 | + | ++ | + | + |
| | | 3-2 | + | ++ | + | + |
| | | 3-3 | + | +++ | ++ | + |
| | | 3-4 | + | +++ | ++ | + |

As shown in examples in Table 15, it was confirmed that a molded body formed from a thermoplastic resin composition for carbon fiber reinforcement containing a recycled carbon fiber (A) and a thermoplastic resin (B) and in which the recycled carbon fiber (A) having an oxygen content of 5.0 mass% or more and an acid value of 0.002 to 0.080 mmol/g, and the thermoplastic resin (B) had an average flow start temperature of 250°C or lower and contains at least one of a polyester resin (iii-B1) and a polycarbonate resin (iii-B2) had excellent productivity and excellent elastic modulus and impact strength.

[Fourth example]

Hereinafter, fourth examples corresponding to the fourth embodiment will be described.

<Production of r-CF>

< <Production Example 4-1>> to < <Production Example 4-3 > >

Production Examples 1-1 to 1-3 will be referred to in order.

<<Raw materials>>

Raw materials used in examples and the like are shown below.

<r-CF (A), etc.>

The same A-1 to A-III and A'-IV as in the first examples were used.

<Thermoplastic resin (B)>

·iv-B-I: Prime polypro J708UG (commercially available from SunAllomer Ltd., a melting point of 162°C, block PP, an MFR of 45 g/10 min)
·iv-B-II: Prime polypro E-200GP (commercially available from Prime polymer, a melting point of 165°C, homo PP, an MFR of 2.0 g/10 min)
·iv-B-III: SunAllomer PM900A (commercially available from SunAllomer Ltd., homo PP, a melting point of 163°C, an MFR of 30 g/10 min)

[Acid-modified polypropylene (iv-b-1), etc.]

·iv-b-1-I: Admer QB550 (commercially available from Mitsui Chemicals, Inc., a melt viscosity of 200 MPa·s, an acid value of 2.3 mgKOH/g, melting point: 165°C)
·iv-b-1-II: UMEX 1001 (commercially available from Sanyo Chemical Industries, Ltd., a melt viscosity of 1 MPa·s, an acid value of 26 mgKOH/g, melting point: 142°C)

[Thermoplastic elastomer (b-2), etc.]

·iv-b-2x-I: acid-modified SEBS, Tuftec M1943 (commercially available from Asahi Kasei Chemicals Corporation, an acid value of 10 mgCH$_3$ONa/g, an MFR of 8.0 g/10 min)
·iv-b-2y-II: SEBS, Tuftec H1221 (commercially available from Asahi Kasei Chemicals Corporation, an MFR of 5.0 g/10 min, no acid modification)
·iv-b-2x-III: acid-modified ethylene-propylene rubber, Tafmer MP0610 (commercially available from Mitsui Chemicals, Inc., an MFR of 0.6 g/10 min)
·iv-b-2y-IV: ethylene-propylene rubber, Tafmer DF640 (commercially available from Mitsui Chemicals, Inc., an MFR of 3.6 g/10 min, no acid modification)

<Production of thermoplastic resin composition>

(Example 4-1)

10 parts by mass of A-1 as the r-CF (A), 87 parts by mass of the polyolefin resin (iv-B) as the thermoplastic resin (B), and 3 parts by mass of the acid-modified polypropylene (iv-b-1-I) were extruded with a twin-screw extruder (commercially available from The Japan Steel Works, Ltd.) at 280°C and granulated to obtain a thermoplastic resin composition (refer to Table 16). Table 18 shows physical property values of the r-CF (A) and the thermoplastic resin (B).

(Examples 4-2 to 4-33, Reference Examples 4-1 and 4-2, and Comparative Example 4-1)

Thermoplastic resin compositions were obtained in the same method as in Example 4-1 except that materials and amounts added (parts by mass) were changed as shown in Tables 16 and 17. Tables 18 and 19 show physical property values of the r-CF (A) and the thermoplastic resin (B) of examples and the like.

[Table 16]

| | | Recycled carbon fiber (A), etc. | | | | Thermoplastic resin (B) | | | Acid-modified polyolefin (b-1) | | Thermoplastic elastomer (b-2) | |
|---|---|---|---|---|---|---|---|---|---|---|---|---|
| | | A-I | A-II | A-III | A'-IV | iv-B-I | iv-B-II | iv-B-III | iv-b-I-I | iv-b-1-II | iv-b-2x-I | iv-b-2y-II |
| Example | 4-1 | 10 | | | | 87 | | | 3 | | | |
| | 4-2 | 20 | | | | 77 | | | 3 | | | |
| | 4-3 | 30 | | | | 67 | | | 3 | | | |
| | 4-4 | 40 | | | | 57 | | | 3 | | | |
| | 4-5 | 50 | | | | 47 | | | 3 | | | |
| | 4-6 | 30 | | | | 65 | | | 5 | | | |
| | 4-7 | | 30 | | | 65 | | | 5 | | | |
| | 4-8 | | | 30 | | 65 | | | 5 | | | |
| | 4-9 | 30 | | | | | 65 | | 5 | | | |
| | 4-10 | 30 | | | | | | 65 | 5 | | | |
| | 4-11 | 30 | | | | | | 60 | 10 | | | |
| | 4-12 | 30 | | | | | | 50 | 20 | | | |
| | 4-13 | 30 | | | | | | 40 | 30 | | | |
| | 4-14 | 30 | | | | | | 55 | 10 | | 5 | |
| | 4-15 | 30 | | | | | | 50 | 10 | | 10 | |
| | 4-16 | 30 | | | | | | 55 | 10 | | | 5 |
| | 4-17 | 30 | | | | | | 60 | | 10 | | |
| Reference Example | 4-1 | | | | 30 | | | 65 | 5 | | | |
| Comparative Example | 4-1 | 30 | | | | 70 | | | | | | |

[Table 17]

| | | Recycled carbon fiber (A), etc. | | | | Thermoplastic resin (B) | | | Thermoplastic elastomer (b-2) | | | |
|---|---|---|---|---|---|---|---|---|---|---|---|---|
| | | A-I | A-II | A-III | A'-IV | iv-B-I | iv-B-II | iv-B-III | iv-b-2x-I | iv-b-2y-II | iv-b-2x-III | iv-b-2y-IV |
| Example | 4-18 | 10 | | | | 87 | | | 3 | | | |
| | 4-19 | 20 | | | | 77 | | | 3 | | | |
| | 4-20 | 30 | | | | 67 | | | 3 | | | |
| | 4-21 | 40 | | | | 57 | | | 3 | | | |
| | 4-22 | 50 | | | | 47 | | | 3 | | | |
| | 4-23 | 30 | | | | 65 | | | 5 | | | |
| | 4-24 | | 30 | | | 65 | | | 5 | | | |
| | 4-25 | | | 30 | | 65 | | | 5 | | | |
| | 4-26 | 30 | | | | | 65 | | 5 | | | |
| | 4-27 | 30 | | | | | | 65 | 5 | | | |
| | 4-28 | 30 | | | | | | 65 | | 5 | | |
| | 4-29 | 30 | | | | | | 65 | | | 5 | |
| | 4-30 | 30 | | | | | | 65 | | | | 5 |
| | 4-31 | 30 | | | | | | 60 | 10 | | | |
| | 4-32 | 30 | | | | | | 50 | 20 | | | |
| | 4-33 | 30 | | | | | | 40 | 30 | | | |
| Reference Example | 4-2 | | | | 30 | | | 70 | | | | |
| Comparative Example | 4-1 | 30 | | | | 70 | | | | | | |

[Table 18]

| | | Recycled carbon fiber (A), etc. | | | | Acid-modified polyolefin (b-1) | |
|---|---|---|---|---|---|---|---|
| | | Oxygen content (mass%) | $I_2$ | $I_1/I_2$ | Bulk density (g/cm$^3$) | Melt viscosity $\eta c$ (Pa.s) | Melting point (°C) |
| Example | 4-1 | 6 | 700 | 5.8 | 0.25 | 200 | 165 |
| | 4-2 | 6 | 700 | 5.8 | 0.25 | 200 | 165 |
| | 4-3 | 6 | 700 | 5.8 | 0.25 | 200 | 165 |
| | 4-4 | 6 | 700 | 5.8 | 0.25 | 200 | 165 |
| | 4-5 | 6 | 700 | 5.8 | 0.25 | 200 | 165 |
| | 4-6 | 6 | 700 | 5.8 | 0.25 | 200 | 165 |
| | 4-7 | 6 | 700 | 5.8 | 0.25 | 200 | 165 |
| | 4-8 | 6 | 690 | 5 | 0.1 | 200 | 165 |
| | 4-9 | 6 | 700 | 5.8 | 0.25 | 200 | 165 |
| | 4-10 | 6 | 700 | 5.8 | 0.25 | 200 | 165 |
| | 4-11 | 6 | 700 | 5.8 | 0.25 | 200 | 165 |
| | 4-12 | 6 | 700 | 5.8 | 0.25 | 200 | 165 |
| | 4-13 | 6 | 700 | 5.8 | 0.25 | 200 | 165 |
| | 4-14 | 6 | 700 | 5.8 | 0.25 | 200 | 165 |
| | 4-15 | 6 | 700 | 5.8 | 0.25 | 200 | 165 |
| | 4-16 | 6 | 700 | 5.8 | 0.25 | 200 | 165 |
| | 4-17 | 6 | 700 | 5.8 | 0.25 | 1 | 142 |
| Reference Example | 4-1 | 0 | 940 | 6.9 | 0.53 | 200 | 165 |
| Comparative Example | 4-1 | 6 | 700 | 5.8 | 0.25 | - | - |

[Table 19]

| | | Recycled carbon fiber (A), etc. | | | |
|---|---|---|---|---|---|
| | | Oxygen content (mass%) | $I_2$ | $I_1/I_2$ | Bulk density (g/cm$^3$) |
| Example | 4-18 | 6 | 700 | 5.8 | 0.25 |
| | 4-19 | 6 | 700 | 5.8 | 0.25 |
| | 4-20 | 6 | 700 | 5.8 | 0.25 |
| | 4-21 | 6 | 700 | 5.8 | 0.25 |
| | 4-22 | 6 | 700 | 5.8 | 0.25 |
| | 4-23 | 6 | 700 | 5.8 | 0.25 |
| | 4-24 | 6 | 690 | 5 | 0.1 |
| | 4-25 | 6 | 850 | 5.9 | 0.03 |
| | 4-26 | 6 | 700 | 5.8 | 0.25 |
| | 4-27 | 6 | 700 | 5.8 | 0.25 |
| | 4-28 | 6 | 700 | 5.8 | 0.25 |
| | 4-29 | 6 | 700 | 5.8 | 0.25 |
| | 4-30 | 6 | 700 | 5.8 | 0.25 |
| | 4-31 | 6 | 700 | 5.8 | 0.25 |
| | 4-32 | 6 | 700 | 5.8 | 0.25 |
| | 4-33 | 6 | 700 | 5.8 | 0.25 |
| Reference Example | 4-2 | 0 | 940 | 6.9 | 0.53 |
| Comparative Example | 4-1 | 6 | 700 | 5.8 | 0.25 |

<Evaluation of thermoplastic resin composition>

The thermoplastic resin compositions according to examples and the like were subjected to the following evaluations. The results are shown in Tables 20 and 21.

α) for evaluation of productivity (deposits at tip of die) and β) evaluation of productivity (accumulation of fibers), the first examples were referred to.

<Production of molded body>

The thermoplastic resin composition of examples and the like was molded using an injection molding machine (commercially available from Toshiba Machine Co., Ltd.) to obtain an A1 type dumbbell-shaped test piece and a B2 type rectangular test piece according to JIS K 7139:2019.

<Evaluation of molded body>

The molded bodies according to examples and the like were subjected to the following evaluation. The results are shown in Tables 20 and 21.

γ) Evaluation of tensile strength

Using the obtained dumbbell-shaped test piece of examples and the like, the tensile strength was measured according to JIS K 7161-1:2014. A higher measured value indicates better tensile strength. The evaluation criteria for the strength are as follows.

+++: 80 MPa or more. excellent.

++: 60 MPa or more and less than 80 MPa. good.

+: 40 MPa or more and less than 60 MPa. practical range.

NG: less than 40 MPa. poor.

For applications such as automobile parts for which high strength was required, the tensile strength was preferably 60 MPa or more.

For δ) evaluation of elastic modulus and ε) evaluation of Charpy impact strength, evaluation was performed using the same method and criteria as in the first examples except that the molding method was changed as described above.

ζ) Evaluation of temperature of deflection under load (H. D. T)

Using the obtained rectangular test piece of examples and the like, the temperature of deflection under load was measured according to JIS K 7191-2:2015. Evaluation criteria are as follows.

+++: 140°C or higher. excellent.

++: 120°C or higher and lower than 140°C. good.

+: 100°C or higher and lower than 120°C. practical range.

NG: lower than 100°C.

For applications such as automobile parts for which high heat resistance was required, the temperature of deflection under load was preferably 120°C or higher.

[Table 20]

|  |  | Productivity | | Physical properties | | | |
|  |  | Deposits at tip of die | Accumulation of fibers | Tensile strength | Elastic modulus | Charpy impact strength | Temperature of deflection under load |
| --- | --- | --- | --- | --- | --- | --- | --- |
| Example | 4-1 | ++ | +++ | ++ | ++ | ++ | ++ |
|  | 4-2 | ++ | +++ | ++ | ++ | ++ | ++ |
|  | 4-3 | ++ | +++ | ++ | +++ | ++ | ++ |
|  | 4-4 | ++ | +++ | ++ | +++ | ++ | ++ |
|  | 4-5 | ++ | +++ | ++ | +++ | ++ | ++ |
|  | 4-6 | +++ | +++ | ++ | +++ | ++ | ++ |
|  | 4-7 | +++ | ++ | ++ | +++ | ++ | ++ |
|  | 4-8 | +++ | + | ++ | +++ | ++ | ++ |
|  | 4-9 | +++ | +++ | ++ | ++ | ++ | +++ |
|  | 4-10 | +++ | +++ | ++ | +++ | ++ | +++ |
|  | 4-11 | +++ | +++ | +++ | +++ | ++ | +++ |
|  | 4-12 | +++ | +++ | +++ | +++ | ++ | +++ |
|  | 4-13 | +++ | +++ | +++ | ++ | ++ | ++ |
|  | 4-14 | +++ | +++ | +++ | +++ | +++ | +++ |
|  | 4-15 | +++ | +++ | +++ | +++ | +++ | +++ |
|  | 4-16 | +++ | +++ | +++ | +++ | ++ | +++ |
|  | 4-17 | +++ | +++ | +++ | ++ | ++ | ++ |
| Reference Example | 4-1 | +++ | +++ | +++ | +++ | ++ | +++ |

(continued)

| | | Productivity | | Physical properties | | | |
|---|---|---|---|---|---|---|---|
| | | Deposits at tip of die | Accumulation of fibers | Tensile strength | Elastic modulus | Charpy impact strength | Temperature of deflection under load |
| Comparative Example | 4-1 | ++ | +++ | + | +++ | + | ++ |

[Table 21]

| | | Productivity | | Physical properties | | | |
|---|---|---|---|---|---|---|---|
| | | Deposits at tip of die | Accumulation of fibers | Tensile strength | Elastic modulus | Charpy impact strength | Temperature of deflection under load |
| Example | 4-18 | ++ | +++ | ++ | ++ | ++ | ++ |
| | 4-19 | ++ | +++ | ++ | ++ | ++ | +++ |
| | 4-20 | ++ | +++ | ++ | ++ | ++ | +++ |
| | 4-21 | ++ | +++ | ++ | ++ | ++ | +++ |
| | 4-22 | ++ | +++ | ++ | ++ | ++ | +++ |
| | 4-23 | +++ | +++ | ++ | ++ | +++ | +++ |
| | 4-24 | +++ | ++ | ++ | ++ | +++ | +++ |
| | 4-25 | +++ | + | ++ | ++ | +++ | +++ |
| | 4-26 | +++ | +++ | ++ | +++ | +++ | +++ |
| | 4-27 | +++ | +++ | ++ | +++ | +++ | ++ |
| | 4-28 | +++ | +++ | ++ | +++ | ++ | +++ |
| | 4-29 | +++ | +++ | ++ | +++ | +++ | +++ |
| | 4-30 | +++ | +++ | ++ | +++ | ++ | +++ |
| | 4-31 | +++ | +++ | ++ | ++ | +++ | ++ |
| | 4-32 | +++ | +++ | ++ | ++ | +++ | ++ |
| | 4-33 | +++ | +++ | ++ | ++ | +++ | ++ |
| Reference Example | 4-2 | +++ | +++ | ++ | +++ | ++ | +++ |
| Comparative Example | 4-1 | ++ | +++ | + | +++ | + | ++ |

As shown in examples in Tables 20 and 21, it was confirmed that a molded body formed from a thermoplastic resin composition containing an r-CF (A) having an oxygen content of 5.0 mass% or more, a polyolefin resin (iv-B), and at least one of an acid-modified polypropylene (iv-b-1) and a thermoplastic elastomer (iv-b-2) in combination had excellent productivity, and excellent tensile strength, elastic modulus, impact strength and temperature of deflection under load.

[Industrial Applicability]

According to the present invention, even if recycled carbon fibers are used, it is possible to provide a thermoplastic resin composition containing recycled carbon fibers having excellent productivity and excellent impact resistance and a molded body thereof and thus they can be used as recycled carbon fiber-reinforced plastics.
Priority is claimed on Japanese Patent Application No. 2021-93138, filed June 2, 2021, on Japanese Patent Application No. 2021-190760, 2021-190761, and 2021-190762, filed November 25, 2021, and on Japanese Patent Application No. 2021-198686, filed December 7, 2021, the content of which is incorporated herein by reference.

**Claims**

1. A thermoplastic resin composition for carbon fiber reinforcement containing a recycled carbon fiber (A) and a thermoplastic resin (B),

   wherein the oxygen content in the recycled carbon fiber (A) is 5.0 mass% or more,
   wherein the thermoplastic resin composition satisfies any of the following (i) to (iv):

   (i): the thermoplastic resin (B) has an average solubility parameter of 10 to 15 and contains a polyamide resin (i-B),
   (ii): the thermoplastic resin (B) has an average solubility parameter of 9 to 15 and contains at least one of an acrylic resin (ii-B 1) and a styrenic resin (ii-B2), and the glass transition temperature of the acrylic resin (ii-B1) and the styrenic resin (ii-B2) is 0°C or higher,
   (iii): the recycled carbon fiber (A) has an acid value of 0.002 to 0.080 mmol/g and the thermoplastic resin (B) has an average flow start temperature of 250°C or lower and contains at least one of a polyester resin (iii-B1) and a polycarbonate resin (iii-B2), and
   (iv): the thermoplastic resin (B) contains a polyolefin resin having a melting point of 100°C or higher (excluding acid-modified thermoplastic resins) (iv-B) and at least one of an acid-modified polypropylene (iv-b-1) and a thermoplastic elastomer (iv-b-2), and the melting point of the acid-modified polypropylene (iv-b-1) is 130°C or higher,

   where, the oxygen content is a value measured using an energy dispersive X-ray spectrometer attached to a scanning electron microscope at an acceleration voltage of 15 kV and a field magnification of 3,000,
   wherein the average solubility parameter is a value calculated by the following Formula (1):

   $$SP \ value = \sqrt{(Ev/v)} = \sqrt{(\Sigma\Delta ei/\Sigma\Delta vi)}$$

   (however, in the formula, Ev: evaporation energy (cal/mol), v: molar volume ($cm^3$/mol), $\Delta ei$: evaporation energy of each atom or atom group, and $\Delta vi$: molar volume of each atom or atom group), and
   wherein the flow start temperature is a temperature at which the melt viscosity of the thermoplastic resin under a pressure of 9.8 MPa is 4,800 Pa·s or less in the evaluation of the melt viscosity using a flow tester.

2. The thermoplastic resin composition according to claim 1,
   wherein an intensity ratio $I_1/I_2$ of a diffraction intensity $I_1$ at a Bragg angle $2\theta=25°$ to a diffraction intensity $I_2$ at $2\theta=44°$ observed by an X-ray diffraction method for the recycled carbon fiber (A) is less than 6.

3. The thermoplastic resin composition according to claim 1 or 2,

   wherein the recycled carbon fiber (A) has a bulk density of 0.03 to 1.0 g/$cm^3$,
   where, the bulk density is a value obtained according to JIS K 5101.

4. The thermoplastic resin composition according to any one of claims 1 to 3,
   wherein the thermoplastic resin composition satisfies (iv), and the acid-modified polypropylene (iv-b-1) has a melt viscosity $\eta c$ of 10 to 500 Pa·s at 220°C and a shear rate of $1.2\times10^3$ $sec^{-1}$.

5. The thermoplastic resin composition according to any one of claims 1 to 4,
   wherein the thermoplastic resin composition satisfies (iv), and the polyolefin resin having a melting point of 100°C or higher (excluding acid-modified thermoplastic resins) (iv-B) is a polypropylene homopolymer.

6. The thermoplastic resin composition according to any one of claims 1 to 5,
   wherein the thermoplastic resin composition satisfies (iv), and the thermoplastic resin (B) contains an acid-modified polypropylene (iv-b-1) and a thermoplastic elastomer (iv-b-2).

7. The thermoplastic resin composition according to any one of claims 1 to 3,
   wherein the thermoplastic resin composition satisfies any of (i) to (iii), and the thermoplastic resin (B) contains an acid-modified thermoplastic elastomer (b-1).

8. A molded body molded from the thermoplastic resin composition according to any one of claims 1 to 7.

## INTERNATIONAL SEARCH REPORT

| International application No. |
| --- |
| **PCT/JP2022/016271** |

### A. CLASSIFICATION OF SUBJECT MATTER

*C08L 101/00*(2006.01)i; *C08K 3/04*(2006.01)i; *C08K 7/06*(2006.01)i; *C08L 13/00*(2006.01)i; *C08L 15/00*(2006.01)i; *C08L 21/00*(2006.01)i; *C08L 23/00*(2006.01)i; *C08L 23/02*(2006.01)i; *C08L 23/12*(2006.01)i; *C08L 23/26*(2006.01)i; *C08L 25/04*(2006.01)i; *C08L 33/00*(2006.01)i; *C08L 67/00*(2006.01)i; *C08L 69/00*(2006.01)i

FI:  C08L101/00; C08K3/04; C08K7/06; C08L13/00; C08L15/00; C08L21/00; C08L23/00; C08L23/02 ZAB; C08L23/12; C08L23/26; C08L25/04; C08L33/00; C08L67/00; C08L69/00

According to International Patent Classification (IPC) or to both national classification and IPC

### B. FIELDS SEARCHED

Minimum documentation searched (classification system followed by classification symbols)

C08L101/00; C08K3/04; C08K7/06; C08L13/00; C08L15/00; C08L21/00; C08L23/00; C08L23/02; C08L23/12; C08L23/26; C08L25/04; C08L33/00; C08L67/00; C08L69/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 11-209634 A (ASICS CORP) 03 August 1999 (1999-08-03) | 1-8 |
| A | JP 2016-521295 A (ELG CARBON FIBRE INTERNATIONAL GMBH) 21 July 2016 (2016-07-21) | 1-8 |
| A | JP 2016-041800 A (EFUTEKKUSU KK) 31 March 2016 (2016-03-31) | 1-8 |
| A | JP 07-33904 A (TORAY IND INC) 03 February 1995 (1995-02-03) | 1-8 |
| A | JP 2006-335890 A (TEIJIN CHEM LTD) 14 December 2006 (2006-12-14) | 1-8 |
| A | JP 2011-122032 A (JAPAN FINE CERAMICS CENTER) 23 June 2011 (2011-06-23) | 1-8 |
| A | JP 2008-285600 A (ITATSU, Hideto) 27 November 2008 (2008-11-27) | 1-8 |
| A | JP 2013-147545 A (DOSHISHA) 01 August 2013 (2013-08-01) | 1-8 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 June 2022** | **28 June 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/016271**

**C. DOCUMENTS CONSIDERED TO BE RELEVANT**

| Category* | Citation of document, with indication, where appropriate, of the relevant passages | Relevant to claim No. |
|---|---|---|
| A | JP 2019-163354 A (TAKAROKU SHOJI KK) 26 September 2019 (2019-09-26) | 1-8 |
| A | JP 2020-075493 A (SHINRYO CORP) 21 May 2020 (2020-05-21) | 1-8 |

Form PCT/ISA/210 (second sheet) (January 2015)

**INTERNATIONAL SEARCH REPORT**
**Information on patent family members**

International application No.

**PCT/JP2022/016271**

| Patent document cited in search report | | | Publication date (day/month/year) | Patent family member(s) | | | Publication date (day/month/year) |
|---|---|---|---|---|---|---|---|
| JP | 11-209634 | A | 03 August 1999 | (Family: none) | | | |
| JP | 2016-521295 | A | 21 July 2016 | WO | 2014/154703 | A1 | |
| | | | | EP | 2783764 | A1 | |
| | | | | CN | 105246605 | A | |
| | | | | US | 2016/0039118 | A1 | |
| JP | 2016-041800 | A | 31 March 2016 | (Family: none) | | | |
| JP | 07-33904 | A | 03 February 1995 | (Family: none) | | | |
| JP | 2006-335890 | A | 14 December 2006 | (Family: none) | | | |
| JP | 2011-122032 | A | 23 June 2011 | (Family: none) | | | |
| JP | 2008-285600 | A | 27 November 2008 | (Family: none) | | | |
| JP | 2013-147545 | A | 01 August 2013 | (Family: none) | | | |
| JP | 2019-163354 | A | 26 September 2019 | (Family: none) | | | |
| JP | 2020-075493 | A | 21 May 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7118440 A
- JP 2020075493 A
- JP 2019163354 A
- JP 2020176244 A
- JP 2021093138 A
- JP 2021190760 A
- JP 2021190761 A
- JP 2021190762 A
- JP 2021198686 A

**Non-patent literature cited in the description**

- *Polym. Eng. Sci.,* 1974, vol. 14, 147